# EUROPEAN PATENT APPLICATION

(11) **EP 4 716 274 A1**
(43) Date of publication of application: **25.03.2026**
(21) Application number: 24822564.1
(22) Date of filing: 31.05.2024
(51) Int. Cl.: H04W 16/14

(54) **COOPERATIVE COMMUNICATION METHOD AND APPARATUS**

(30) Priority: 16.06.2023 CN 202310731838
(71) Applicant: Huawei Technologies Co., Ltd., Shenzhen, Guangdong 518129 (CN)
(72) Inventor: GUO, Yuchen, Shenzhen, Guangdong 518129 (CN)
(74) Representative: Körber, Martin Hans
(86) International application number: PCT/CN2024/096522
(87) International publication number: WO 2024/255612

(57) **Abstract**

This application provides a coordinated communication method and an apparatus. The method includes: A first device receives a first frame from a second device on a first link, where the first device uses a non-simultaneous transmit and receive NSTR link pair including the first link and a second link, the first link is a secondary link of the first device, the second link is a primary link of the first device, the first frame indicates that a first time-frequency resource on the first link is shared, and a time domain position of the first time-frequency resource is within a first transmit opportunity TXOP of the second device on the first link. The first device determines, based on statuses of the first link and the second link, whether to send a second frame to the second device on the first link, where the second frame is an acknowledgment frame of the first frame. According to the method, coordination between a plurality of APs can be easier and more efficient.

## Description

This application claims priority to Chinese Patent Application No. 202310731838.7, filed with the China National Intellectual Property Administration on June 16, 2023 and entitled "COORDINATED COMMUNICATION METHOD AND APPARATUS", which is incorporated herein by reference in its entirety.

### TECHNICAL FIELD

This application relates to the field of communication technologies, and more specifically, to a coordinated communication method and an apparatus.

### BACKGROUND

With development of wireless networks and continuous popularization of wireless local area network (wireless local area network, WLAN) technologies, WLAN devices become increasingly dense. Because wireless access points (access points, APs) are easy to deploy, increasingly dense APs also cause more inter-basic service set BSS interference. In a current multi-AP networking scenario, there is the following channel selection rule: If operating channels (bandwidths) of two APs overlap, primary channels of the two APs need to be at a same position. According to the foregoing rule, to reduce inter-BSS interference, the AP usually selects a small and non-overlapping bandwidth.

However, the small bandwidth leads to a low peak rate during communication of the APs, and the non-overlapping bandwidth limits coordination between a plurality of APs, which are not conducive to improving quality of service of a user. Therefore, how to improve coordination efficiency between a plurality of APs on a premise of ensuring quality of service of a user is an urgent problem that needs to be resolved currently.

### SUMMARY

This application provides a coordinated communication method and an apparatus, so that coordination between a plurality of APs can be easier and more efficient while quality of service of a user is ensured.

According to a first aspect, a coordinated communication method is provided. The method includes: A first device receives a first frame from a second device on a first link, where the first device uses the first link and a second link, the first frame indicates that the second device shares a first time-frequency resource on the first link with the first device, a time domain position of the first time-frequency resource is within a current first transmit opportunity TXOP, and the first TXOP is a transmit opportunity of the second device on the first link. When a first condition is met, the first device sends a second frame to the second device on the first link, where the second frame is an acknowledgment frame of the first frame, and the first condition includes: The first device determines that the first link is currently in an idle state; and the first device determines that the second link is currently in a busy state, or the first device is capable of sending data on the second link.

It should be understood that the first device and the second device may be multi-link devices (multi-link devices, MLDs), the first device and the second device may be access points (Access Points, APs) in a multi-link device MLD, or the first device and the second device may be stations (Stations, STAs) in a multi-link device MLD. This is not limited in this embodiment of this application.

It should be noted that, that the first device uses the first link and the second link may be understood as that the first device establishes the first link and the second link.

It should be noted that when the second device is an MLD, that the first TXOP is the transmit opportunity of the second device on the first link may be understood as that the first TXOP is a transmit opportunity of an AP or a STA in the second device.

It should be understood that the second frame indicates that the first device acknowledges use of the first time-frequency resource.

It should be understood that a specific manner in which the first device determines that the first link is in the idle state is not limited in this embodiment of this application. For example, the first device may determine, through energy detection (Energy Detection) based on a clear channel assessment (Clear Channel Assessment, CCA) mechanism, that the second link is in the idle state.

Based on the foregoing solution, the first device receives the first frame from the second device, and determines, based on statuses of the first link and the second link, whether to use the shared first time-frequency resource on the first link, so that a plurality of devices can share a TXOP on one link. Therefore, coordination efficiency between the plurality of devices is improved on a premise of ensuring quality of service of a user.

With reference to the first aspect, in some implementations of the first aspect, the second device uses the second link.

With reference to the first aspect, in some implementations of the first aspect, the first link and the second link belong to a non-simultaneous transmit and receive NSTR link pair.

With reference to the first aspect, in some implementations of the first aspect, the first link is a secondary link of the first device, and the first link is a primary link of the second device; and the second link is a primary link of the first device, and the second link is a secondary link of the second device.

Based on the foregoing solution, the first device receives the first frame from the second device, where the first frame is used to share the first time-frequency resource on the secondary link of the first device. Further, the first device determines, based on statuses of the secondary link and the primary link of the first device, whether to use the first time-frequency resource, so that when the first time-frequency resource on the secondary link is shared with the first device, the first device can use the first time-frequency resource on a premise of ensuring that transmission on the primary link is not interfered. Therefore, the coordination efficiency between the plurality of devices is improved on the premise of ensuring the quality of service of the user.

With reference to the first aspect, in some implementations of the first aspect, the first device determines that non-intra basic service set BSS transmission currently exists on the second link.

Based on the foregoing solution, that the first device determines the busy state of the second link is specifically that the first device determines that non-intra BSS transmission exists on the second link, so that the first time-frequency resource can be used on the premise of ensuring that transmission on the primary link is not interfered.

With reference to the first aspect, in some implementations of the first aspect, the method further includes: The first device determines first time, where the first time is end time of non-intra BSS transmission. Before the first time, the first device stops using the first time-frequency resource.

It should be understood that how to determine the first time is not limited in this embodiment of this application. By way of example, and not limitation, the first device determines the first time based on duration of a data packet on the first link.

By way of example, and not limitation, the first device implements virtual monitoring by using a network allocation vector (Network Allocation Vector, NAV), to determine the first time based on a duration/ID field in the data packet.

Based on the foregoing solution, after determining the first time in which the primary link of the first device is to be busy, the first device may use the shared first time-frequency resource on the secondary link before the first time ends, so that the first time-frequency resource can be used on the premise of ensuring that transmission on the primary link is not interfered.

With reference to the first aspect, in some implementations of the first aspect, that the first device is capable of sending data on the second link includes: the first device completes backoff on the second link; or the second device shares a second time-frequency resource on the second link with the first device, where a time domain position of the second time-frequency resource is within a second TXOP, and the second TXOP is a transmit opportunity of the second device on the second link.

Based on the foregoing solution, when the first time-frequency resource on the secondary link is shared with the first device, the first device determines that data can be sent on the primary link of the first device, that is, the first device completes backoff before receiving the first frame, or the second time-frequency resource is shared with the first device before the first device receives the first frame. Therefore, both the primary link and the secondary link can be used for transmission on a premise of ensuring that sending on the primary link is not interfered, so that the coordination efficiency between the plurality of devices is improved.

With reference to the first aspect, in some implementations of the first aspect, that the second device shares the second time-frequency resource on the second link with the first device includes: The first device receives a third frame from the second device on the second link, where the third frame indicates that the second device shares the second time-frequency resource with the first device. When the first device determines that the second link is idle, the first device sends a fourth frame to the second device on the second link, where the fourth frame is an acknowledgment frame of the third frame.

It should be understood that the fourth frame indicates that the first device acknowledges use of the second time-frequency resource.

Based on the foregoing solution, when the time-frequency resource on the primary link is shared with the first device, the first device determines that the primary link is in the idle state when the third frame is received. Therefore, the coordination efficiency between the plurality of devices is improved on the premise of ensuring the quality of service of the user.

With reference to the first aspect, in some implementations of the first aspect, the first frame and the third frame are MU-RTS frames, and the second frame and the fourth frame are CTS frames.

Based on the foregoing solution, the first frame and the third frame may use the multi-user request to send (Multi-User Request to Send, MU-RTS) frames, and the second frame and the fourth frame may use the clear to send (Clear to Send, CTS) frames, so that a method for coordinated transmission between the plurality of devices is more convenient.

According to a second aspect, a coordinated communication method is provided. The method includes: A second device obtains a first transmit opportunity TXOP on a first link. The second device sends a first frame to a first device on the first link, where the first device uses a non-simultaneous transmit and receive NSTR link pair, the NSTR link pair includes the first link and a second link, the first link is a secondary link of the first device, the first frame indicates that the second device shares a first time-frequency resource on the first link with the first device, and a time domain position of the first time-frequency resource is within the first TXOP. The second device receives a second frame from the first device on the first link, where the second frame is an acknowledgment frame of the first frame.

It should be understood that for definitions of the first device and the second device, refer to the first aspect. Details are not described herein again.

It should be understood that the second frame indicates that the first device acknowledges use of the first time-frequency resource.

It should be noted that that the first device uses the NSTR link pair may be understood as that the first device establishes the first link and the second link in the NSTR link pair.

Based on the foregoing solution, after obtaining the transmit opportunity on the first link, the second device may share the time-frequency resource in the transmit opportunity with the first device by sending the first frame, where the link is the secondary link of the first device. Correspondingly, the second device determines, based on statuses of the secondary link and the primary link of the second device, whether to use the first time-frequency resource, so that when the first time-frequency resource on the secondary link is shared with the first device, the first device can use the first time-frequency resource on a premise of ensuring that transmission on the primary link is not interfered. Therefore, coordination efficiency between a plurality of devices is improved on a premise of ensuring quality of service of a user.

With reference to the second aspect, in some implementations of the second aspect, the second device uses the NSTR link pair, the first link is a primary link of the second device, the second link is a secondary link of the second device, and the second link is a primary link of the first device.

With reference to the second aspect, in some implementations of the second aspect, the method further includes: The second device obtains a second TXOP on the second link. The second device sends a third frame to the first device on the second link, where the third frame indicates that the second device shares a second time-frequency resource on the second link with the first device, and a time domain position of the second time-frequency resource is within the second TXOP. The second device receives a fourth frame from the first device on the second link, where the fourth frame is an acknowledgment frame of the third frame.

It should be understood that the fourth frame indicates that the first device acknowledges use of the second time-frequency resource.

Based on the foregoing solution, after obtaining the second TXOP on the second link, the second device may share the second time-frequency resource in the second TXOP with the first device by sending the third frame on the second link, where the second link is the secondary link of the second device, and the primary link of the first device. Correspondingly, after receiving the third frame, the first device determines that the second link is idle, and replies with the fourth frame to acknowledge use of the second time-frequency resource. Therefore, the coordination efficiency between the plurality of devices is improved on the premise of ensuring the quality of service of the user.

With reference to the second aspect, in some implementations of the second aspect, before the second device obtains the second TXOP on the second link, the method further includes: The second device determines that non-intra BSS transmission currently exists on the first link.

Based on the foregoing solution, that the second device determines a busy state of the second link is specifically that the second device determines that non-intra BSS transmission exists on the second link, so that the second TXOP can be obtained on the premise of ensuring that transmission on the primary link is not interfered.

With reference to the second aspect, in some implementations of the second aspect, the method further includes: The second device determines second time, where the second time is end time of non-intra BSS transmission. Before the second time, the second device stops using the second TXOP.

It should be understood that how to determine the second time is not limited in this embodiment of this application. For a specific manner, refer to the descriptions of determining the first method in the first aspect. Details are not described herein again.

Based on the foregoing solution, after determining the second time in which the primary link of the second device is to be busy, the second device may obtain the second TXOP on the secondary link, and use the second TXOP before sharing the second time-frequency resource in the second TXOP. Therefore, the coordination efficiency between the plurality of devices is improved on a premise of avoiding interference to transmission on the primary link.

With reference to the second aspect, in some implementations of the second aspect, the first frame and the third frame are multi-user request to send MU-RTS frames, and the second frame and the fourth frame are clear to send CTS frames.

Based on the foregoing solution, the first frame and the third frame may use the MU-RTS frames, and the second frame and the fourth frame may use the CTS frames, so that a method for coordinated transmission between the plurality of devices is more convenient.

According to a third aspect, a coordinated transmission method is provided. The method includes: A first device receives a third frame from a second device on a second link, where the second device uses a non-simultaneous transmit and receive NSTR link pair, the NSTR link pair includes a first link and the second link, the second link is a secondary link of the second device, the third frame indicates that the second device shares a second time-frequency resource on the second link with the first device, a time domain position of the second time-frequency resource is within a second TXOP, and the second TXOP is a transmit opportunity of the second device on the second link. When the first device determines that the second link is idle, the first device sends a fourth frame to the second device on the second link, where the fourth frame is an acknowledgment frame of the third frame.

It should be understood that for definitions of the first device and the second device, refer to the first aspect. Details are not described herein again.

It should be understood that the second frame indicates that the first device acknowledges use of the first time-frequency resource.

It should be noted that that the second device uses the NSTR link pair may be understood as that the second device establishes the first link and the second link in the NSTR link pair.

Based on the foregoing solution, the first device receives the third frame from the second device, where the third frame is used to share the second time-frequency resource on the second link. Further, the first device sends the fourth frame when determining that the primary link of the first device is in an idle state, to acknowledge use of the second time-frequency resource. Therefore, coordination efficiency between a plurality of devices is improved on a premise of ensuring quality of service of a user.

With reference to the third aspect, in some implementations of the third aspect, the first device uses the NSTR link pair, and the second link is a primary link of the first device.

With reference to the third aspect, in some implementations of the third aspect, the third frame is an MU-RTS frame, and the fourth frame is a CTS frame.

Based on the foregoing solution, the third frame may use the MU-RTS frame, and the fourth frame may use the CTS frame, so that a method for coordinated transmission between the plurality of devices is more convenient.

According to a fourth aspect, a coordinated transmission method is provided. The method includes: A second device determines that a first link is in a busy state, where the second device uses a non-simultaneous transmit and receive NSTR link pair, the NSTR link pair includes the first link and a second link, and the first link is a primary link of the second device. The second device obtains a second transmit opportunity TXOP on the second link, where the second link is a secondary link of the second device. The second device sends a third frame to a first device on the second link, where the third frame indicates that the second device shares a second time-frequency resource on the second link with the first device, and a time domain position of the second time-frequency resource is within the second TXOP. The second device receives a fourth frame from the first device on the second link, where the fourth frame is an acknowledgment frame of the third frame.

It should be understood that for definitions of the first device and the second device, refer to the first aspect. Details are not described herein again.

It should be understood that the second frame indicates that the first device acknowledges use of the first time-frequency resource.

It should be noted that that the second device uses the NSTR link pair may be understood as that the second device establishes the first link and the second link in the NSTR link pair.

Based on the foregoing solution, after determining that the primary link of the second device (that is, the first link) is in the busy state, the second device obtains the second TXOP on the secondary link of the second device (that is, the second link), and shares the second time-frequency resource in the second TXOP with the first device by using the third frame. Correspondingly, after receiving the third frame, the first device determines that the second link is in an idle state, and sends the fourth frame, to acknowledge use of the second time-frequency resource. Therefore, coordination efficiency between a plurality of devices is improved on a premise of ensuring quality of service of a user.

With reference to the fourth aspect, in some implementations of the fourth aspect, the first device uses the NSTR link pair, and the first link is a primary link of the first device.

With reference to the fourth aspect, in some implementations of the fourth aspect, that the second device determines that the first link is in the busy state includes: The first device determines that non-intra BSS transmission exists on the second link.

Based on the foregoing solution, that the second device determines a busy state of the second link is specifically that the second device determines that non-intra BSS transmission exists on the second link, so that the second TXOP can be obtained on a premise of ensuring that transmission on the primary link is not interfered.

With reference to the fourth aspect, in some implementations of the fourth aspect, the method further includes: The second device determines second time, where the second time is end time of non-intra BSS transmission. Before the second time, the second device stops using the second TXOP.

It should be understood that how to determine the second time is not limited in this embodiment of this application. For a specific manner, refer to the descriptions of determining the first method in the first aspect. Details are not described herein again.

Based on the foregoing solution, after determining the second time in which the primary link of the second device is to be busy, the second device may obtain the second TXOP on the secondary link, and use the second TXOP before sharing the second time-frequency resource in the second TXOP. Therefore, the coordination efficiency between the plurality of devices is improved on a premise of avoiding interference to transmission on the primary link.

With reference to the fourth aspect, in some implementations of the fourth aspect, the end time of the second time-frequency resource is not earlier than the second time.

With reference to the fourth aspect, in some implementations of the fourth aspect, the end time of the second time-frequency resource is earlier than the second time.

Based on the foregoing solution, a relationship between the second time-frequency resource shared by the second device with the first device and the second time is not limited in this application. Therefore, the coordination efficiency between the plurality of devices is further improved.

With reference to the fourth aspect, in some implementations of the fourth aspect, the third frame is an MU-RTS frame, and the fourth frame is a CTS frame.

Based on the foregoing solution, the third frame may use the multi-user request to send MU-RTS frame, and the fourth frame may use the clear to send CTS frame, so that a method for coordinated transmission between the plurality of devices is more convenient.

According to a fifth aspect, a coordinated transmission method is provided. The method includes: A first device receives a first frame from a second device on a first link, where both the first device and the second link use the first link and a second link, the first frame indicates that the second device shares a first time-frequency resource on the first link with the first device, a time domain position of the first time-frequency resource is within a current first transmit opportunity TXOP, and the first TXOP is a transmit opportunity of the second device on the first link. The first device receives a third frame from the second device on the second link, where the third frame indicates that the second device shares a second time-frequency resource on the second link with the first device, a time domain position of the second time-frequency resource is within a second TXOP, and the second TXOP is a transmit opportunity of the second device on the second link. When the first device determines that the second link is idle, the first device sends a fourth frame to the second device on the second link, where the fourth frame is an acknowledgment frame of the third frame. In response to sending the fourth frame by the first device, when the first device determines that the first link is currently in an idle state, the first device sends a second frame to the second device on the first link, where the second frame is an acknowledgment frame of the first frame.

It should be understood that for definitions of the first device and the second device, refer to the first aspect. Details are not described herein again.

It should be understood that the second frame indicates that the first device acknowledges use of the first time-frequency resource, and the fourth frame indicates that the first device acknowledges use of the second time-frequency resource.

Based on the foregoing solution, after obtaining transmit opportunities on the first link and the second link, the second device may share the first time-frequency resource and the second time-frequency resource in the transmit opportunities with the first device by sending the first frame and the third frame. Correspondingly, the second device determines, based on statuses of the first link and the second link, that is, whether the first link and the second link are idle, whether to use the first time-frequency resource and the second time-frequency resource. Therefore, coordination efficiency between a plurality of devices is improved on a premise of ensuring quality of service of a user.

With reference to the fifth aspect, in some implementations of the fifth aspect, the first link and the second link belong to a non-simultaneous transmit and receive NSTR link pair.

With reference to the fifth aspect, in some implementations of the fifth aspect, the first link is a secondary link of the first device, and the first link is a primary link of the second device; and the second link is a primary link of the first device, and the second link is a secondary link of the second device.

Based on the foregoing solution, after obtaining transmit opportunities on the primary link and the secondary link, the second device may share the first time-frequency resource and the second time-frequency resource in the transmit opportunities with the first device by sending the first frame. Correspondingly, the first time-frequency resource and the second time-frequency resource are shared with the second device on the primary link and the secondary link of the second device. The second device determines that the primary link of the second device is in the idle state, and sends the fourth frame to acknowledge use of the second time-frequency resource. Further, the second device sends, based on that the secondary link is in the idle state, the second frame to acknowledge use of the second time-frequency resource. Therefore, the coordination efficiency between the plurality of devices is improved on the premise of ensuring the quality of service of the user.

With reference to the fifth aspect, in some implementations of the fifth aspect, the method further includes: When the first device determines that the second link is in a busy state and the first link is in the idle state, the first device sends the second frame to the second device on the first link.

Based on the foregoing solution, when the first time-frequency resource is shared with the first device on the secondary link, and it is determined that the secondary link is in the idle state and the primary link is to be busy for a period of time, the first device may send the second frame to the second device to acknowledge use of the second time-frequency resource, so that the first time-frequency resource can be used on a premise of ensuring that transmission on the primary link is not interfered.

According to a sixth aspect, a coordinated transmission method is provided. The method includes: A second device obtains a first transmit opportunity TXOP on a first link, and obtains a second TXOP on a second link. The second device sends a first frame to a first device on the first link, where both the first device and the second device use the first link and the second link, the first frame indicates that the second device shares a first time-frequency resource on the first link with the first device, and a time domain position of the first time-frequency resource is within the first TXOP. The second device sends a third frame to the first device on the second link, where the third frame indicates that the second device shares a second time-frequency resource on the second link with the first device, and a time domain position of the second time-frequency resource is within the second TXOP. The second device receives a second frame from the first device on the first link, where the second frame is an acknowledgment frame of the first frame. The second device receives a fourth frame from the first device on the second link, where the fourth frame is an acknowledgment frame of the third frame.

It should be understood that for definitions of the first device and the second device, refer to the first aspect. Details are not described herein again.

It should be understood that the second frame indicates that the first device acknowledges use of the first time-frequency resource, and the fourth frame indicates that the first device acknowledges use of the second time-frequency resource.

Based on the foregoing solution, after obtaining transmit opportunities on the first link and the second link, the second device may share the first time-frequency resource and the second time-frequency resource in the transmit opportunities with the first device by sending the first frame and the third frame. Correspondingly, the second device determines, based on statuses of the first link and the second link, whether to use the first time-frequency resource and the second time-frequency resource. Therefore, coordination efficiency between a plurality of devices is improved on a premise of ensuring quality of service of a user.

With reference to the sixth aspect, in some implementations of the sixth aspect, the first link and the second link belong to a non-simultaneous transmit and receive NSTR link pair.

With reference to the sixth aspect, in some implementations of the sixth aspect, the first link is a secondary link of the first device, and the first link is a primary link of the second device; and the second link is a primary link of the first device, and the second link is a secondary link of the second device.

Based on the foregoing solution, after obtaining transmit opportunities on the primary link and the secondary link, the second device may share the first time-frequency resource and the second time-frequency resource in the transmit opportunities with the first device by sending the first frame. Correspondingly, the first time-frequency resource and the second time-frequency resource are shared with the second device on the primary link and the secondary link of the second device. Further, the second device determines, based on statuses of the secondary link and the primary link of the second device, whether to use the first time-frequency resource and the second time-frequency resource. Therefore, the coordination efficiency between the plurality of devices is improved on the premise of ensuring the quality of service of the user.

With reference to the sixth aspect, in some implementations of the sixth aspect, before sending the first frame, the first device may use the first TXOP.

With reference to the sixth aspect, in some implementations of the sixth aspect, before sending the third frame, the first device may use the second TXOP.

Based on the foregoing solution, after obtaining the transmit opportunity, the second device may use the transmit opportunity, and share a time-frequency resource in the transmit opportunity with the first device after completing use of the transmit opportunity. Therefore, the coordination efficiency between the plurality of devices is further improved.

With reference to the sixth aspect, in some implementations of the sixth aspect, the first frame and the third frame are MU-RTS frames, and the second frame and the fourth frame are CTS frames.

Based on the foregoing solution, the first frame and the third frame may use the MU-RTS frames, and the second frame and the fourth frame may use the CTS frames, so that a method for coordinated transmission between the plurality of devices is more convenient.

According to a seventh aspect, a communication apparatus is provided. The communication apparatus is configured to perform the method according to any one of the first aspect to the sixth aspect. Specifically, the communication apparatus may include a unit and/or module configured to perform the method according to any one of the first aspect or the implementations of the first aspect, a unit and/or module configured to perform the method according to any one of the second aspect or the implementations of the second aspect, a unit and/or module configured to perform the method according to any one of the third aspect or the implementations of the third aspect, a unit and/or module configured to perform the method according to any one of the fourth aspect or the implementations of the fourth aspect, a unit and/or module configured to perform the method according to any one of the fifth aspect or the implementations of the fifth aspect, or a unit and/or module configured to perform the method according to any one of the sixth aspect or the implementations of the sixth aspect, for example, a processing unit and/or a transceiver unit.

In an implementation, the communication apparatus is a first device or a second device. When the communication apparatus is the device, the transceiver unit may be a transceiver or an input/output interface, and the processing unit may be at least one processor. Optionally, the transceiver may be a transceiver circuit. Optionally, the input/output interface may be an input/output circuit.

In another implementation, the communication apparatus is a chip, a chip system, or a circuit used in a first device or a second device. When the communication apparatus is the chip, the chip system, or the circuit used in the device, the transceiver unit may be an input/output interface, an interface circuit, an output circuit, an input circuit, a pin, a related circuit, or the like in the chip, the chip system, or the circuit; and the processing unit may be at least one processor, a processing circuit, a logic circuit, or the like.

According to an eighth aspect, a communication apparatus is provided. The apparatus includes: a memory, configured to store a program; and at least one processor, configured to execute a computer program or instructions stored in the memory, to perform the method according to any one of the first aspect or the implementations of the first aspect, the method according to any one of the second aspect or the implementations of the second aspect, the method according to any one of the third aspect or the implementations of the third aspect, the method according to any one of the fourth aspect or the implementations of the fourth aspect, the method according to any one of the fifth aspect or the implementations of the fifth aspect, or the method according to any one of the sixth aspect or the implementations of the sixth aspect.

In an implementation, the communication apparatus is a first device or a second device.

In another implementation, the apparatus is a chip, a chip system, or a circuit used in a first device or a second device.

According to a ninth aspect, this application provides a processor, configured to perform the methods according to the foregoing aspects.

Operations such as sending and obtaining/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions. This is not limited in this application.

According to a tenth aspect, a computer-readable storage medium is provided. The computer-readable medium stores program code executed by a device, and the program code includes instructions used to perform the method according to any one of the first aspect or the implementations of the first aspect, instructions used to perform the method according to any one of the second aspect or the implementations of the second aspect, instructions used to perform the method according to any one of the third aspect or the implementations of the third aspect, instructions used to perform the method according to any one of the fourth aspect or the implementations of the fourth aspect, instructions used to perform the method according to any one of the fifth aspect or the implementations of the fifth aspect, or instructions used to perform the method according to any one of the sixth aspect or the implementations of the sixth aspect.

According to an eleventh aspect, a computer program product including instructions is provided. When the computer program product runs on a computer, the computer is enabled to perform the method according to any one of the first aspect or the implementations of the first aspect, the method according to any one of the second aspect or the implementations of the second aspect, the method according to any one of the third aspect or the implementations of the third aspect, the method according to any one of the fourth aspect or the implementations of the fourth aspect, the method according to any one of the fifth aspect or the implementations of the fifth aspect, or the method according to any one of the sixth aspect or the implementations of the sixth aspect.

According to a twelfth aspect, a chip is provided. The chip includes a processor and a communication interface. The processor reads, through the communication interface, instructions stored in a memory, to perform the method according to any one of the first aspect or the implementations of the first aspect, the method according to any one of the second aspect or the implementations of the second aspect, the method according to any one of the third aspect or the implementations of the third aspect, the method according to any one of the fourth aspect or the implementations of the fourth aspect, the method according to any one of the fifth aspect or the implementations of the fifth aspect, or the method according to any one of the sixth aspect or the implementations of the sixth aspect.

Optionally, in an implementation, the chip further includes the memory, the memory stores a computer program or instructions, and the processor is configured to execute the computer program or the instructions stored in the memory. When the computer program or the instructions are executed, the processor is configured to perform the method according to any one of the first aspect or the implementations of the first aspect, the method according to any one of the second aspect or the implementations of the second aspect, the method according to any one of the third aspect or the implementations of the third aspect, the method according to any one of the fourth aspect or the implementations of the fourth aspect, the method according to any one of the fifth aspect or the implementations of the fifth aspect, or the method according to any one of the sixth aspect or the implementations of the sixth aspect.

### BRIEF DESCRIPTION OF DRAWINGS

FIG. 1 is a diagram of a communication system applicable to embodiments of this application;
FIG. 2 is a diagram of multi-link communication;
FIG. 3 is a diagram of a channel selection manner;
FIG. 4 is a diagram of another channel selection manner;
FIG. 5 is a diagram of a channel selection manner applicable to embodiments of this application;
FIG. 6 is a diagram of a scenario of non-simultaneous transmit and receive on two links;
FIG. 7 is a diagram of a coordinated communication method 100 according to an embodiment of this application;
FIG. 8 is a diagram of a coordinated communication method 200 according to an embodiment of this application;
FIG. 9 is a diagram of a usage scenario of a solution A of the method 200 according to an embodiment of this application;
FIG. 10 is a diagram of a usage scenario of a solution B of the method 200 according to an embodiment of this application;
FIG. 11 is a diagram of a usage scenario of a solution C of the method 200 according to an embodiment of this application;
FIG. 12 is a block diagram of an apparatus applied to coordinated communication according to an embodiment of this application;
FIG. 13 is a diagram of a communication apparatus 3000 according to an embodiment of this application;
FIG. 14 is a block diagram of a communication apparatus 4000 according to an embodiment of this application; and
FIG. 15 is a block diagram of a communication apparatus 5000 according to an embodiment of this application.

### DESCRIPTION OF EMBODIMENTS

Technical solutions provided in this application are applicable to a wireless local area network (wireless local area network, WLAN) scenario. For example, the technical solutions in this application are applicable to an IEEE 802.11 system standard, for example, the 802.11a/b/g standard, the 802.11n standard, the 802.11 ac standard, the 802.11ax standard, or a next-generation standard thereof, for example, the 802.11be standard or a further next-generation standard.

Although this application is mainly described by using an example in which a WLAN, especially a network to which the IEEE 802.11 system standard is applied, is deployed, a person skilled in the art may easily understand that various aspects in this application may be extended to other networks that use various standards or protocols, for example, Bluetooth (Bluetooth) network, a high performance radio local area network (high performance radio local area network, HIPERLAN), a wide area network (wide area network, WAN), a personal area network (personal area network, PAN), and other networks that are known or developed in the future. Therefore, regardless of a used coverage area and a used wireless access protocol, the various aspects provided in this application are applicable to any appropriate wireless network.

The technical solutions of this application may be further applied to various communication systems, for example, a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunication system (universal mobile telecommunication system, UMTS), a worldwide interoperability for microwave access (worldwide interoperability for microwave access, WiMAX) communication system, a 5th generation (5th generation, 5G) system or new radio (new radio, NR) system, a 6th generation (6th generation, 6G) system, and a wireless local area network system, for example, an internet of things (internet of things, IoT) network or vehicle-to-everything (vehicle-to-X, V2X) network.

The communication systems applicable to this application are merely examples for description, and are not limited thereto. Unified descriptions are provided herein, and details are not described below again.

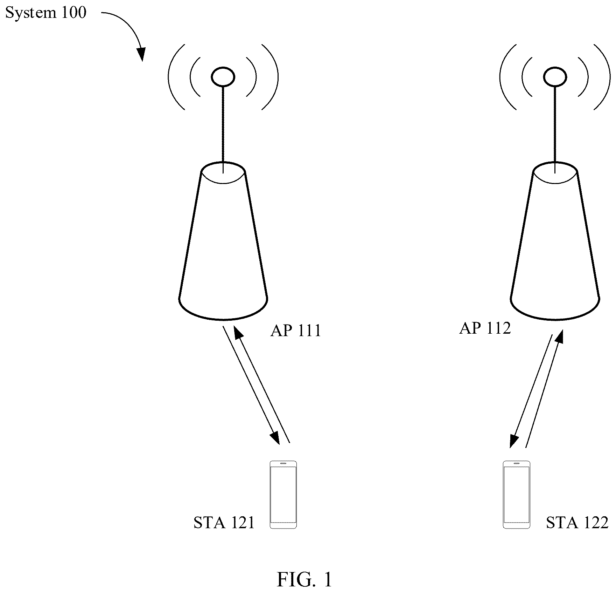

For ease of understanding embodiments of this application, a communication system applicable to embodiments of this application is first described in detail with reference to FIG. 1.

FIG. 1 is another diagram of a wireless communication system 100 applicable to embodiments of this application. As shown in FIG. 1, the technical solutions in embodiments of this application may be applied to a wireless local area network. The wireless communication system 100 may include at least two access point (Access Point, AP) devices, such as an AP 111 and an AP 112 shown in FIG. 1. The wireless communication system 100 may further include at least two station (station, STA) devices, such as a STA 121 and a STA 122 shown in FIG. 1. For example, the AP may be a multi-link AP, or the STA may be a multi-link STA.

One or more STAs in the station devices may communicate with one or more APs in the access point devices after an association relationship is established between the one or more STAs and the one or more APs. For example, the AP 111 may communicate with the STA 121. For example, the AP 111 communicates with the STA 121 after an association relationship is established between the AP 111 and the STA 121. The AP 112 may communicate with the STA 122. For example, the AP 112 communicates with the STA 122 after an association relationship is established between the AP 112 and the STA 122.

In embodiments of this application, a first device and a second device may be, for example, access point devices. For example, the first device may include the AP 111, and the second device may include the AP 112. Alternatively, the first device and the second device may be, for example, station devices. For example, the first device may include the STA 121, and the second device may include the STA 122.

It should be understood that the communication system applicable to this application described with reference to FIG. 1 is merely an example for description, and the communication system applicable to this application is not limited thereto. For example, the communication system may include more APs. For another example, the communication system may further include more STAs. For another example, embodiments of this application may be applied to a multi-device coordination scenario, for example, a multi-AP (multiple access points, Multi-AP) coordination scenario or a multi-station coordination scenario.

The AP device in embodiments of this application may be a device in a wireless network. The AP device may be a communication entity, for example, a communication server, a router, a switch, or a bridge, or the AP device may include a macro base station, a micro base station, a relay station, or the like in various forms. Certainly, the AP may alternatively be a chip, a circuit, or a processing system in the devices in various forms, to implement the methods and functions in embodiments of this application. The AP device may be applied to a plurality of scenarios, for example, a sensor node (for example, a smart water meter, a smart electricity meter, or a smart air detection node) in a smart city, a smart device (for example, a smart camera, a projector, a display, a television, a speaker, a refrigerator, or a washing machine) in a smart home, a node in an internet of things, an entertainment terminal (for example, a wearable device such as an AR or VR device), a smart device (for example, a printer or a projector) in a smart office, an internet of vehicles device in an internet of vehicles, and some infrastructures (for example, a vending machine, a self-service navigation kiosk of a shopping mall or supermarket, a self-service cash register, and a self-service food ordering machine) in a daily life scenario.

The STA device in embodiments of this application may be a device having a wireless transceiver function, for example, may be a device that supports 802.11 series protocols and may communicate with an AP or another STA. For example, the STA is any user communication device that allows a user to communicate with an AP to communicate with a WLAN. The STA device is, for example, user equipment (user equipment, UE), a mobile station (mobile station, MS), a mobile terminal (mobile terminal, MT), an access terminal, a subscriber unit, a subscriber station, a mobile station, a remote station, a remote terminal, a mobile device, a user terminal, a terminal, a wireless communication device, a user agent, a user apparatus, or the like.

The STA in embodiments of this application may alternatively be a device that provides a user with voice/data connectivity, for example, a handheld device or vehicle-mounted device having a wireless connection function. For example, the STA is a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a hand-held device having a wireless communication function, a computing device or another processing device connected to a wireless modem, a vehicle-mounted device, a wearable device, a terminal device in a 5G network, or a terminal device in a future evolved public land mobile network (public land mobile network, PLMN). This is not limited in embodiments of this application.

By way of example, and not limitation, in embodiments of this application, the STA device may alternatively be a wearable device. The wearable device may also be referred to as a wearable intelligent device, and is a general term of wearable devices, such as glasses, gloves, watches, clothes, and shoes, that are developed by applying wearable technologies to intelligent designs of daily wear. For example, smart watches or smart glasses, and devices that focus on only one type of application function need to work with other devices such as smartphones, such as various smart bands or smart jewelry for monitoring physical signs.

In addition, in embodiments of this application, the STA device may alternatively be a terminal device in an internet of things (Internet of Things, IoT) system. IoT is an important part of future development of information technology, and a main technical feature of IoT is to connect a thing to a network by using a communication technology, to implement an intelligent network of human-machine interconnection and thing-thing interconnection. In embodiments of this application, an IoT technology may implement massive connections, deep coverage, and terminal power saving by using, for example, a narrowband (narrowband, NB) technology.

In addition, in embodiments of this application, the STA device may be a device in an internet of vehicles system. Communication modes in the internet of vehicles system are collectively referred to as V2X (X indicates everything). For example, V2X communication includes vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, or vehicle-to-network (vehicle-to-network, V2N) communication.

In addition, in embodiments of this application, the STA device may further include a sensor in, for example, an intelligent printer, a train detector, or a gas station. Main functions of the STA device include collecting data (by some terminal devices), receiving control information and downlink data from an AP device, sending an electromagnetic wave, and transmitting data to an AP device.

In addition, the AP device in embodiments of this application may be a device configured to communicate with an STA device. The AP device may be a network device in a wireless local area network, and the AP device may be configured to communicate with the STA device through the wireless local area network.

It should be understood that specific forms of the STA device and the AP device are not specially limited in embodiments of this application, and are merely examples for description herein.

In embodiments of this application, a specific structure of an execution body of the method provided in embodiments of this application is not specially limited, provided that a program that records code for the method provided in embodiments of this application can be run to perform communication according to the method provided in embodiments of this application. For example, the method provided in embodiments of this application may be performed by a device (for example, the AP device or the STA device), or a functional module of the device (for example, the AP device or the STA device) that can invoke and execute the program.

In addition, a computer-readable medium in this application may include, but is not limited to, a magnetic storage component (for example, a hard disk, a floppy disk, or a magnetic tape), an optical disc (for example, a compact disc (compact disc, CD) or a digital versatile disc (digital versatile disc, DVD)), and a smart card and a flash memory component (for example, an erasable programmable read-only memory (erasable programmable read-only memory, EPROM), a card, a stick, or a key drive). In addition, various storage media described in this specification may indicate one or more devices and/or other machine-readable media that are configured to store information. The term "machine-readable media" may include but is not limited to a wireless channel, and various other media that can store, include, and/or carry instructions and/or data.

For ease of understanding embodiments of this application, the following briefly describes several terms in this application.

### 1. Multi-link communication

A wireless communication system provided in embodiments of this application may be a WLAN or a cellular network. The method may be implemented by a communication device in the wireless communication system or a chip or a processor in the communication device. The communication device may be a wireless communication device that supports multi-link parallel transmission, which is referred to as, for example, a multi-link device (multi-link device, MLD). Compared with a device that supports only single-link transmission, the multi-link device has higher transmission efficiency and a higher throughput.

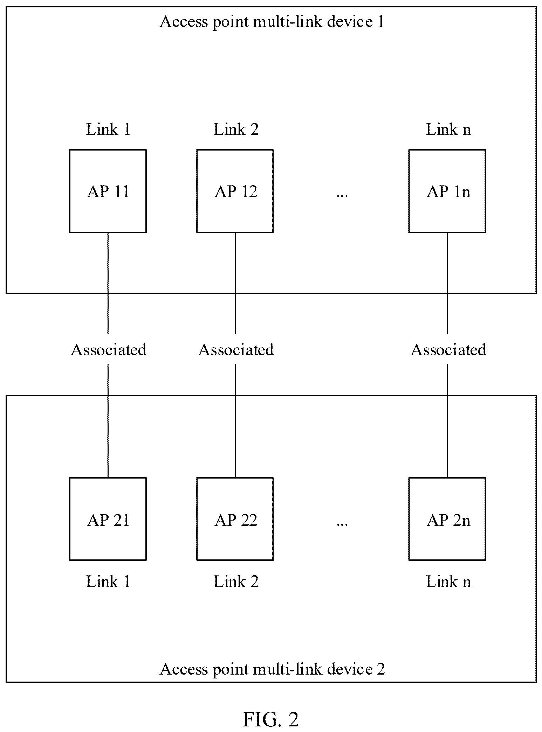

In an example, embodiments of this application may also be applied to a multi-link communication scenario. For example, a first device may be an access point multi-link device 1, and a second device may be an access point multi-link device 2. As shown in FIG. 2, it is assumed that the access point multi-link device 2 includes an AP 21, an AP 22, ..., and an AP 2n, and the access point multi-link device 1 includes an AP 11, an AP 12, ..., and an AP 1n, where n is an integer greater than or equal to 1. For example, the AP 21 may communicate with the AP 11 on a link 1. For another example, the AP 22 may communicate with the AP 12 on a link 2 in FIG. 2. For another example, the AP 2n may communicate with the AP 1n on a link n in FIG. 2.

In a multi-link establishment (or multi-link association) process, a station in a station multi-link device may send an association request frame to an access point in an access point multi-link device. The association request frame carries a multi-link element (multi-link element, MLE, which is also referred to as a multi-link information element) to carry information about the station multi-link device and information about another station in the device. Similarly, an association response frame returned by the access point to the station may also carry an MLE to carry information about the access point multi-link device and information about another access point in the device.

It should be understood that embodiments of this application are not limited to multi-link communication. Embodiments of this application may be applied to any multi-device coordination scenario, for example, a multi-AP (multiple access points, Multi-AP) coordination scenario or a multi-station coordination scenario.

### 2. Multi-AP coordination scenario

With development of wireless networks and continuous popularization of WLAN technologies, WLAN devices become increasingly dense. Because APs are easy to deploy, increasingly dense APs also cause more basic service set BSS interference. How to reduce inter-BSS interference and improve quality of service of users through coordination between APs is a problem that needs to be considered in a next-generation Wi-Fi technology.

A form of coordination between a plurality of APs may include, for example, but is not limited to, coordinated time division multiple access (Coordinated Time Division Multiple Access, Co-TDMA), coordinated orthogonal frequency division multiple access (Coordinated orthogonal frequency division multiple access, Co-OFDMA), and coordinated spatial reuse (Coordinated Spatial Reuse, Co-SR).

### 2.1. Co-TDMA

When an AP performs transmission after obtaining a transmit opportunity (Transmit Opportunity, TXOP), if the AP fails to fully use the transmit opportunity, remaining time in the transmit opportunity may be allocated to another AP for transmission, so that the another AP can quickly obtain transmission, thereby reducing a communication delay.

### 2.2. Co-OFDMA

OFDM is a basic transmission mode of current wireless communication, and is widely applied to wireless communication systems such as LTE, WiMAX, and Wi-Fi. In addition, OFDM is further applied to fixed network transmission, for example, transmission modes such as those using optical fibers, twisted pairs, and cables. A basic principle of OFDM is as follows: A subcarrier spacing is compressed to the minimum within a range allowed by orthogonality of subcarriers. This can ensure formation of a plurality of parallel and non-interfering paths, and can improve frequency utilization efficiency of a system. For example, when a bandwidth is large, a plurality of APs may separately perform transmission on different channels in an OFDMA manner, without interfering with each other.

Further, because OFDM has the foregoing characteristics, if subcarriers of OFDM that do not interfere with each other are allocated to a plurality of users, access or transmission of the plurality of users can be implemented by using OFDM. This is OFDMA. OFDMA may be used to implement parallel transmission of data of the plurality of users, and is an effective manner to improve transmission concurrency. In Co-OFDMA, when a traffic volume of an AP is low, that is, when there is no need to use all channel bandwidths for transmission, the AP may perform transmission together with another AP, and transmission of the APs is staggered on different channels or resource blocks in an OFDMA manner, so that channel resources are effectively utilized.

### 2.3. Co-SR

When a distance between two APs is large, the two APs may perform simultaneous transmission on a same channel/resource block, and low interference between the two APs is ensured through power control and user selection, to effectively utilize channel resources.

Usually, an AP that initiates multi-AP coordinated transmission may be referred to as a sharing AP (sharing AP), and another AP with which a transmission resource or transmit opportunity is shared may be referred to as a shared AP (shared AP).

### 3. Channel selection rule

In a multi-AP networking scenario, there is the following channel selection rule: If operating channels (bandwidths) of two APs overlap, primary channels of the two APs need to be at a same position.

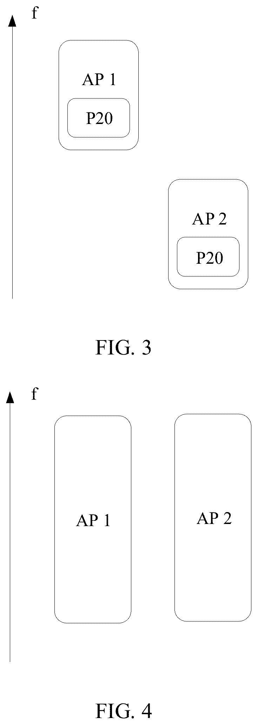

FIG. 3 is a diagram of a channel selection manner. As shown in FIG. 3, during bandwidth selection, an AP 1 and an AP 2 select a small bandwidth of 20 MHz, to ensure that operating channels of the AP 1 and the AP 2 do not overlap operating channels of all surrounding APs. However, when an AP selects a channel in this manner, in an aspect, a small bandwidth is selected, which causes a low peak rate during communication of the APs; in another aspect, because operating channels of a plurality of APs do not overlap, in other words, the plurality of APs operate independently, it is not conducive to coordination between the plurality of APs.

FIG. 4 is a diagram of another channel selection manner. As shown in FIG. 4, an AP 1 and an AP 2 use an overlapping bandwidth, and select a same channel position for a primary channel. Although coordination between a plurality of APs can be implemented in this manner, when such APs perform Co-OFDMA transmission, some APs need to temporarily change positions of primary channels, and STAs connected to the APs also need to change accordingly. Therefore, high operation complexity is caused.

In view of this, this application provides a method, so that AP MLD coordination can be more easily and efficiently performed based on multi-link multi-AP MLD coordination.

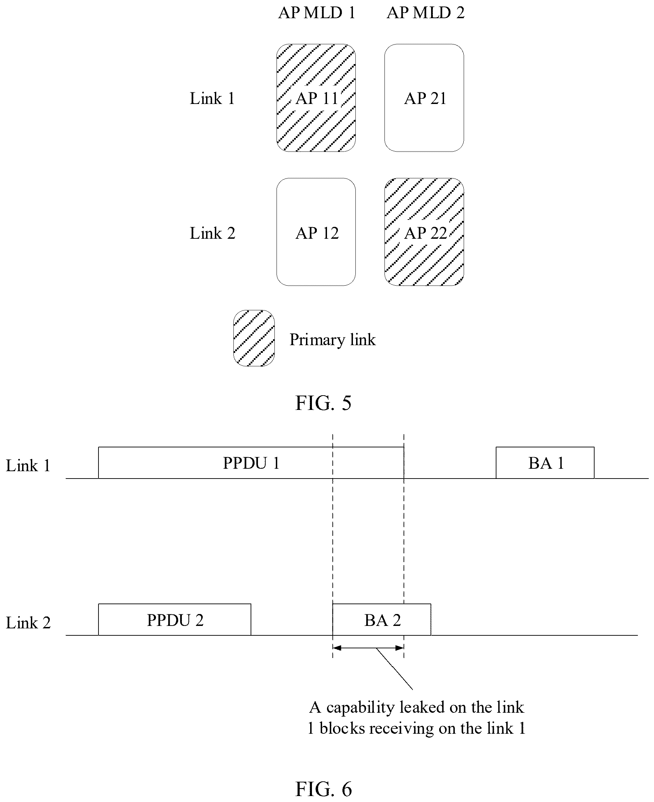

FIG. 5 is a diagram of a channel selection manner applicable to embodiments of this application.

An AP MLD can establish a plurality of links, the plurality of links may occupy adjacent bandwidths, and bandwidths of a plurality of links of a plurality of AP MLDs may overlap with each other.

As shown in FIG. 5, because frequency domain positions of a link 1 and a link 2 are very close, a same AP MLD cannot simultaneously implement receiving and sending on a plurality of links. For example, an AP MLD 1 cannot perform receiving on the link 2 while performing sending on the link 1. Usually, this situation is referred to as non-simultaneous transmit and receive (non-simultaneous transmit and receive, NSTR). The link 1 and the link 2 are referred to as an NSTR link pair (NSTR link pair). Correspondingly, an AP MLD including an NSTR pair is referred to as an NSTR AP MLD. The multi-AP MLD coordination method provided in embodiments of this application is applicable to the NSTR AP MLD.

FIG. 6 is a diagram of a scenario of non-simultaneous transmit and receive on two links. As shown in FIG. 6, for a plurality of links established between an NSTR AP MLD and another multi-link device, when the NSTR AP MLD needs to receive a physical protocol data unit (Physical Protocol Data Unit, PPDU) 1 and a PPDU2 and correspondingly send a block acknowledge (Block Acknowledge, BA) 1 and a BA 2, because a frequency interval between a link 1 and a link 2 is very small, if time in which the BA 2 of the PPDU 2 is sent on the link 2 overlaps time in which the PPDU 1 is received on the link 1, energy leaked in a sending process of the BA 2 on the link 2 blocks receiving of the PPDU 1, and consequently receiving of the PPDU 1 is affected.

Further, in an NSTR pair, one link may be designated as a primary link, and the other link may be designated as a secondary link. By way of example, and not limitation, an AP MLD 1 may use the link 1 as a primary link, and use the link 2 as a secondary link. After the primary link is determined, to ensure that transmission on the secondary link does not cause interference to ongoing transmission or to-be-performed transmission on the primary link, it is specified that the AP MLD can separately perform transmission on the primary link, or perform transmission on both the primary link and the secondary link, but cannot separately perform transmission on the secondary link. Similarly, to avoid interference from transmission on the secondary link to transmission on the primary link, if the AP MLD performs transmission on both the primary link and the secondary link, start time of transmission on the primary link and start time of transmission on the secondary link need to be completely the same. The foregoing rule is based on the definition of an NSTR soft AP MLD in the 802.11be standard.

Embodiments of this application provide a manner different from the foregoing link usage rule. It may be understood that, to implement better coordination between AP MLDs, it may be specified that different primary links are selected between the AP MLDs. For example, in FIG. 5, the AP MLD 1 selects the link 1 as a primary link, and an AP MLD 2 selects the link 2 as a primary link. Based on this, embodiments of this application provide a multi-AP MLD coordination method. A TXOP time-frequency resource of an AP MLD on one or more links is shared with another AP MLD for use, so that transmission efficiency is improved.

The following describes in detail embodiments provided in this application with reference to accompanying drawings. In an example, a device in the following embodiments may be an AP MLD. For example, a first device is a first AP MLD, and a second device is a second AP MLD. In another example, a device in the following embodiments may alternatively be a non-AP MLD (or a STA). For example, a second device is a first non-AP MLD, and a first device is a second non-AP MLD. In other words, embodiments of this application may be applied to a multi-AP coordination scenario, or may be applied to a multi-station coordination scenario.

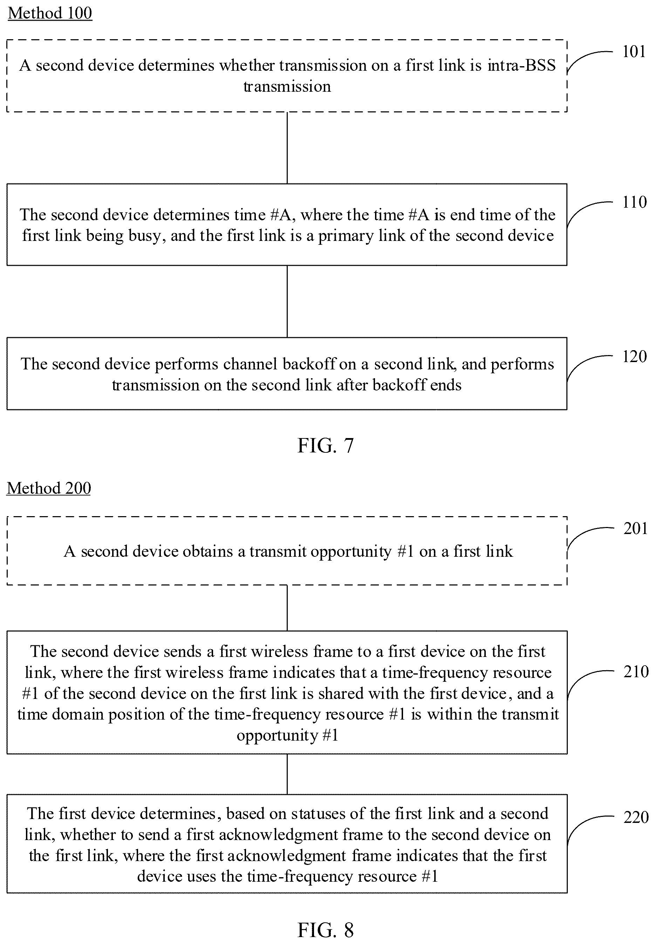

FIG. 7 is a diagram of a coordinated communication method 100 according to an embodiment of this application. The method 100 may include the following steps.

110: A second device determines time #A (namely, second time), where the time #A is end time of a first link being busy, and the first link is a primary link of the second device.

It should be understood that how the second device determines the time #A is not limited in this embodiment of this application.

In a possible implementation, the second device may determine the time #A based on duration of a received data packet.

In another possible implementation, the second device implements virtual monitoring by using a network allocation vector (Network Allocation Vector, NAV), to determine the time #A based on a duration/ID field in a data packet.

It should be understood that the time #A may be duration of one data packet, or the time #A may be duration of a plurality of data packets. This is not limited in this embodiment of this application.

Optionally, before step 110, the method 100 may further include step 101.

101: The second device determines whether transmission on the first link is intra BSS transmission.

The following separately describes step 101 by using an example in which the second device is an AP MLD and an example in which the second device is a non-AP MLD.

In a possible implementation, the second device is an AP MLD. When performing step 110, the AP MLD further determines whether transmission on the primary link is intra BSS transmission, for example, whether transmission on the primary link is end-to-end (end-to-end, D2D) intra BSS transmission. It is easy to understand that, because the AP MLD belongs to an NSTR link pair and cannot simultaneously perform sending and receiving, if transmission on the first link of the AP MLD is intra BSS transmission, a second link cannot be used for transmission.

In another possible implementation, the second device is a non-AP MLD (or a STA). When performing S110 to determine the time #A in which the primary link is to be busy, the STA also needs to determine whether transmission on the primary link is intra BSS transmission, in other words, determine whether an AP in a BSS in which the STA is located performs transmission with another STA. Similarly, if transmission on the first link of the STA is intra BSS transmission, a second link cannot be used for transmission.

It should be understood that how the second device determines whether transmission on the first link is intra BSS transmission is not limited in this embodiment of this application.

In an example, the second device determines, based on whether an address of a sender and/or a receiver of transmission on the first link is an address of a station in a serving BSS, whether transmission on the first link is intra BSS transmission.

In another example, the second device determines, based on whether a BSS color field of a wireless frame transmitted on the first link corresponds to a BSS color of the serving BSS, whether transmission on the first link is intra BSS transmission.

S120: The second device performs channel backoff on the second link, and performs transmission on the second link after backoff ends.

The second device obtains a transmit opportunity (transmit opportunity, TXOP) on the second link in a channel contention manner, and performs transmission on the second link after backoff time ends.

It should be noted that, because the second device belongs to the NSTR link pair and cannot simultaneously perform sending and receiving, to avoid interference from transmission of the second device on the second link to possible transmission performed on the first link after the time #A, the method 100 specifies that transmission of the second device on the second link needs to end before the time #A. Specifically, the second device needs to end, before the time #A, the TXOP obtained on the second link.

It should be understood that data transmitted by the second device on the second link is not limited in this embodiment of this application. For example, the second device transmits a data frame on the second link after backoff ends.

Based on the method 100 provided in this embodiment of this application, after determining the time #A in which the first link is to be busy, the second device can separately use the second link for transmission, so that communication efficiency is improved.

Based on the method 100, for a multi-AP MLD scenario, an embodiment of this application further provides a coordinated communication method 200.

FIG. 8 is a diagram of the coordinated communication method 200 according to this embodiment of this application. The method 200 may include the following steps.

201: A second device obtains a transmit opportunity #1 (namely, a first TXOP) on a first link.

Optionally, the second device obtains a transmit opportunity #2 (namely, a second TXOP) on a second link.

It should be understood that how the second device obtains the transmit opportunity is not limited in this embodiment of this application.

In a possible implementation, the second device may obtain the transmit opportunity #1 in a channel contention manner.

It should be understood that a first device and the second device establish at least one same link. For example, the first device establishes the first link and the second link, and the second device establishes the first link; or both the first device and the second device can establish the first link and the second link. This is not limited in this embodiment of this application. The following uses an example in which the first device establishes both the first link and the second link for description.

In a possible implementation, the first link and the second link belong to a same NSTR link pair. The first link is a primary link of the second device and a secondary link of the first device, and the second link is a secondary link of the second device and a primary link of the first device.

It should be understood that when the second link is the secondary link of the second device, for a specific manner in which the second device obtains a transmit opportunity on the secondary link, refer to the method 100. Details are not described herein again.

210: The second device sends a first wireless frame (namely, a first frame) on the first link, where the first wireless frame indicates that a time-frequency resource #1 of the second device on the first link is shared with the first device, and a time domain position of the time-frequency resource #1 is within the transmit opportunity #1.

Optionally, step 210 may be replaced as follows: The second device sends a second wireless frame (namely, a third frame) on the second link, where the second wireless frame indicates that a time-frequency resource #2 of the second device on the second link is shared with the first device, and a time domain position of the time-frequency resource #2 is within the transmit opportunity #2.

Optionally, step 210 may be replaced as follows: The second device sends a first wireless frame on the first link, and sends a second wireless frame on the second link, where the first wireless frame indicates that a time-frequency resource #1 of the second device on the first link is shared with the first device, and the second wireless frame indicates that a time-frequency resource #2 of the second device on the second link is shared with the first device.

It should be understood that the first wireless frame, the second wireless frame, and a first acknowledgment frame (namely, a second frame) and a second acknowledgment frame (namely, a fourth frame) in the following descriptions are all names for distinguishing between different functions, and the names do not constitute a limitation on the protection scope of embodiments of this application. In a future protocol, all names used to represent a same function are applicable to embodiments of this application.

The second device can share a time-frequency resource with the first device. In other words, the first device may use a time resource of the second device. In this embodiment of this application, devices coordinate with each other. For example, the devices may share a time-frequency resource.

In the following descriptions, for differentiation, a time-frequency resource shared (or allocated) by the second device on the first link is denoted as the time-frequency resource #1, in other words, a time-frequency resource shared by the second device with the first device on the first link is denoted as the time-frequency resource #1; and a time-frequency resource shared by the second device on the second link is denoted as the time-frequency resource #2, in other words, a time-frequency resource shared by the second device with the first device on the second link is denoted as the time-frequency resource #2.

It should be further understood that, in this application, that the first device shares the time-frequency resource #1 or that the first device uses the time-frequency resource #1 is mentioned for a plurality of times, and both indicate that the first device may use some time-frequency resources of the second device, in other words, the first device may use the time-frequency resources for transmission. Certainly, the first device may alternatively use all time-frequency resources of the second device. This is not limited. It may be understood that the time-frequency resource #1 may be some time-frequency resources of the second device in the transmit opportunity #1, or may be all time-frequency resources of the second device in the transmit opportunity #1. Similarly, the time-frequency resource #2 may be some time-frequency resources of the second device in the transmit opportunity #2, or may be all time-frequency resources of the second device in the transmit opportunity #2. This is not limited. This is not described again below.

In this application, a sharing (sharing) device is denoted as the second device, in other words, the second device represents the sharing device, and the second device may be, for example, a sharing AP; and a shared (shared) device is denoted as the first device, in other words, the second device represents the shared device, and the first device may be, for example, a shared AP. This is not described again below.

It should be understood that, in this embodiment of this application, an occasion at which the second device sends the first wireless frame and/or the second wireless frame is not limited. The following uses an occasion at which the second device sends the first wireless frame as an example for description.

In an example, the second device may send the first wireless frame after obtaining the transmit opportunity #1.

For example, after obtaining the TXOP on the first link through channel contention, the second device may send the first wireless frame on the first link, where the first wireless frame is used to share the TXOP with the first device on the first link. In other words, the second device may share the TXOP of the second device with the first device on the first link, so that multi-AP MLD coordination efficiency is improved.

In another example, the second device may alternatively first perform transmission after obtaining a time resource, and then send the first wireless frame after transmission ends.

For example, after obtaining the TXOP on the first link through channel contention, the second device may first perform transmission, and then send the first wireless frame on the first link after transmission ends, where the first wireless frame is used to share the TXOP with the first device on the first link. In other words, the second device may share, with the first device, the TXOP that is not fully used on the first link, so that transmission of the second device can be ensured, and another device (that is, the first device) can perform communication by using an unused resource. Therefore, multi-AP MLD coordination efficiency is improved.

It should be understood that the time resource shared by the second device is not limited in this embodiment of this application.

220: The first device determines, based on statuses of the first link and the second link, whether to send the first acknowledgment frame (namely, the second frame) to the second device, where the first acknowledgment frame indicates that the first device uses the time resource #1.

Optionally, in response to the second wireless frame, step 220 may be replaced as follows: The first device determines, based on a status of the second link, whether to send the second acknowledgment frame to the second device on the second link, where the second acknowledgment frame indicates that the first device uses the time resource #2.

Optionally, in response to the first wireless frame and the second wireless frame, step 220 may be replaced as follows: The first device determines, based on statuses of the first link and the second link, whether to send the first acknowledgment frame and the second acknowledgment frame to the second device, where the first acknowledgment frame indicates that the first device uses the time resource #1, and the second acknowledgment frame indicates that the first device uses the time resource #2.

It should be understood that a specific manner in which the first device determines, based on the statuses of the first link and the second link, whether to send the first acknowledgment frame and/or the second acknowledgment frame is described in detail below.

It should be understood that a time-frequency resource shared by the second device with the first device is not limited in this embodiment of this application. For example, the second device may share only a time-frequency resource on the primary link, or the second device may share only a time-frequency resource on the secondary link, or the second device may share time-frequency resources on the primary link and the secondary link.

In the method 200 provided in this embodiment of this application, based on a specific time resource shared by the second device, the following three solutions may be included:

Solution A: The second device may share only the time-frequency resource #1 by using the first wireless frame.

Solution B: The second device may share only the time-frequency resource #2 by using the second wireless frame.

Solution C: The second device may share the time-frequency resource #1 and the time-frequency resource #2 by using the first wireless frame and the second wireless frame. This is not limited.

The following describes the three possible solutions. The solution A is first described. The solution A may include the following steps.

A10: The second device sends the first wireless frame on the first link, where the first wireless frame indicates that the time-frequency resource #1 obtained by the second device on the first link is shared with the first device.

Optionally, before sending the first wireless frame, the second device may perform transmission on the first link.

A20: When a first condition is met, the first device sends the first acknowledgment frame to the second device on the first link, where the first acknowledgment frame is used to acknowledge that the first device uses the time-frequency resource #1, and the first condition includes: The first device determines that the first link is currently in an idle state; and the first device determines that the second link is currently in a busy state rather than an idle state in a time domain range of the first TXOP, or the first device is capable of sending data on the second link.

It should be noted that the first link is the primary link of the second device and the secondary link of the first device, and the second link is the secondary link of the second device and the primary link of the first device.

It may be understood that, because the first link is the secondary link of the first device, when the second device shares the time resource #1 with the first device, the first device needs to ensure that transmission on the second link does not affect transmission on the first link.

It may be understood that, based on the principle of separately using the secondary link provided in embodiments of this application, before sending the first acknowledgment frame, the first device further needs to determine whether the first link and the second link meet the first condition. To be specific, when determining that the first link is idle, the first device further needs to determine whether the second link is to be busy for a period of time, or whether the first device is capable of sending data on the second link, to avoid impact of transmission on the secondary link on transmission on the primary link.

In a possible implementation, the first device can send the first acknowledgment frame to the second device on the first link only when the first link is idle and the first device has completed backoff on the second link.

It should be understood that a specific manner in which the first device determines that the first link is in the idle state is not limited in this embodiment of this application.

In an example, the first device determines, through energy detection (Energy Detection) based on a clear channel assessment (Clear Channel Assessment, CCA) mechanism, that the first link is in the idle state.

In another example, the first device performs virtual carrier sensing by using an NAV, to determine that the first link is in the idle state.

It should be understood that in this implementation, before receiving the first wireless frame, the first device completes backoff on the second link (that is, a backoff counter is 0).

In another possible implementation, the first device can send the first acknowledgment frame to the second device on the first link only when the first link is idle, and the first device determines that the second link is in the busy state, for example, non-intra BSS transmission exists on the second link. For a specific manner, refer to the method 100. Details are not described herein again.

In this implementation, the first device determines end time #B (namely, first time) of the second link being busy, and before the time #B, the first device stops using the time resource #1. In other words, the first device needs to end transmission on the first link before the time #B of the second link being busy.

It should be understood that time indicated by the first device in a duration field in the first acknowledgment frame is earlier than the time #B.

It should be understood that the first wireless frame and the first acknowledgment frame in this embodiment of this application may reuse current wireless frames, or may be used as newly added wireless frames. This is not limited.

In an example, the first wireless frame is an MU-RTS (Multi-User Request to Send) frame, and the first acknowledgment frame is a CTS (Clear to Send, CTS) frame.

It may be understood that after sending the first acknowledgment frame, the first device uses the time-frequency resource #1 on the first link.

It should be understood that data transmitted by the first device on the first link is not limited in this embodiment of this application. For example, the second device transmits a data frame on the first link after sending the first acknowledgment frame.

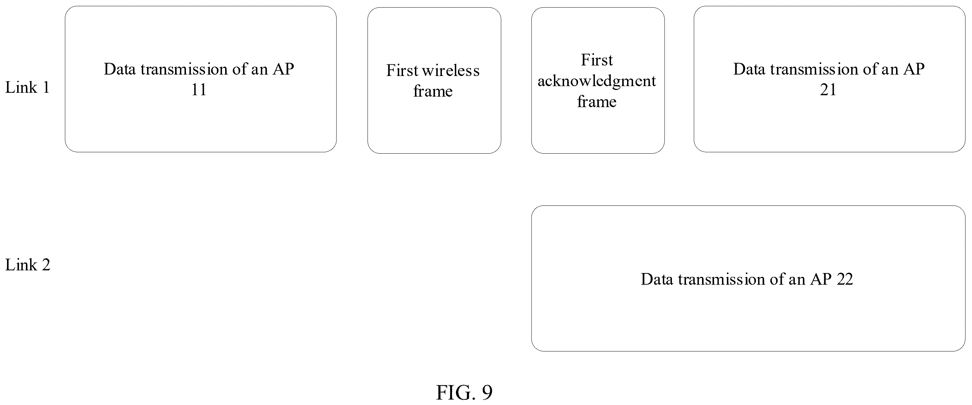

FIG. 9 is a diagram of a usage scenario of the solution A of the method 200 according to an embodiment of this application. As shown in FIG. 9, after completing data transmission on a link 1, an AP 11 belonging to an AP MLD 1 (namely, the second device) sends the first wireless frame to an AP 21 belonging to an AP MLD 2 (namely, the first device). In response, after the foregoing determining (as shown in the figure, an AP 22 belonging to the AP MLD 2 sends data on a link 2), the AP 21 sends the first acknowledgment frame to the AP 11 on the link 1, and then performs data transmission on the link 1.

The following describes the solution B. The solution B may include the following steps.

B10: The second device sends the second wireless frame on the second link, where the second wireless frame indicates that the time-frequency resource #2 obtained by the second device on the second link is shared with the first device.

It should be noted that the first link is the primary link of the second device and the secondary link of the first device, and the second link is the secondary link of the second device and the primary link of the first device.

It may be understood that, because the second link is the secondary link of the second device, regardless of whether the second device separately uses the second link for transmission (that is, the method 100) or the second device shares the time-frequency resource #2 with the first device, the second device needs to ensure that transmission on the second link does not affect transmission on the first link.

Based on the foregoing principle, before step B10, the solution B further includes the following steps.

B01: The second device determines time #A, where the time #A is end time of the first link being busy. For a specific manner, refer to the method 100. Details are not described herein again.

B02: The second device performs channel backoff on the second link, and determines the time-frequency resource #2 after backoff ends. For a specific method, refer to step 201. Details are not described herein again.

In a possible implementation, before sending the second wireless frame, the second device may perform transmission on the second link.

It should be understood that the second device needs to end transmission on the second link before the time #A.

B20: The first device sends the second acknowledgment frame to the second device on the second link, where the second acknowledgment frame is used to acknowledge that the first device uses the time-frequency resource #2.

It may be understood that, because the second link is the primary link of the first device, after receiving the second wireless frame and determining that the second link is idle, the first device can send the second acknowledgment frame.

It should be understood that the second wireless frame and the second acknowledgment frame in this embodiment of this application may reuse current wireless frames, or may be used as newly added wireless frames. This is not limited.

In an example, the second wireless frame is an MU-RTS frame, and the second acknowledgment frame is a CTS frame.

B30: The first device uses the time-frequency resource #2 on the second link.

It should be understood that data transmitted by the first device on the first link is not limited in this embodiment of this application. For example, the second device transmits a data frame on the first link after sending the first acknowledgment frame.

It should be understood that specific end time at which the first device performs transmission by using the time-frequency resource #2 is not limited in this embodiment of this application.

Specifically, end time of the time-frequency resource #2 indicated by the second device in the second wireless frame may be later than the time #A.

Correspondingly, the first device may end transmission on the second link before the time #A, or when the end time of the time-frequency resource #2 shared by the second device is later than the time #A, the first device may end transmission on the second link after the time #A and before the end time of the time-frequency resource #2.

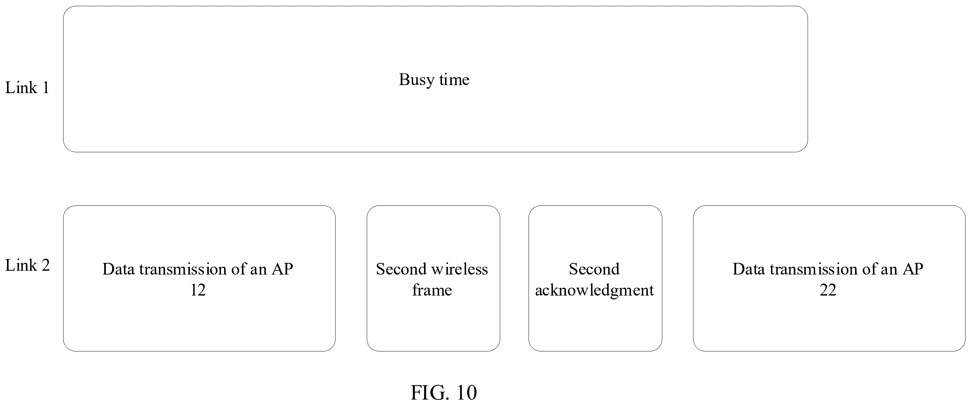

FIG. 10 is a diagram of a usage scenario of the solution B of the method 200 according to an embodiment of this application. As shown in FIG. 10, after completing channel preemption (not shown in the figure) and data transmission on a link 2, an AP 12 belonging to an AP MLD 1 (namely, the second device) sends the second wireless frame to an AP 22 belonging to an AP MLD 2 (namely, the first device). In response, after the foregoing determining, the AP 22 sends the second acknowledgment frame to the AP 12 on the link 2, and then performs data transmission on the link 2.

The following describes the solution C. The solution C may include the following steps.

C01: The second device obtains the transmit opportunity #1 on the first link, and obtains the transmit opportunity #2 on the second link.

It should be understood that, for the second device obtaining the transmit opportunity #2 on the second link, refer to the method 100. Details are not described herein again.

C10: The second device sends the first wireless frame on the first link, and sends the second wireless frame on the second link, where the first wireless frame indicates that the time-frequency resource #1 obtained by the second device on the first link is shared with the first device, and the second wireless frame indicates that the time-frequency resource #2 obtained by the second device on the second link is shared with the first device.

In a possible implementation, the second device simultaneously sends the first wireless frame and the second wireless frame.

In a possible implementation, the first wireless frame and the second wireless frame have a same length.

C20: The first device sends the first acknowledgment frame to the second device on the first link, and sends the second acknowledgment frame to the second device on the second link, where the first acknowledgment frame is used to acknowledge that the first device uses the time-frequency resource #1, and the second acknowledgment frame is used to acknowledge that the first device uses the time-frequency resource #2.

It should be understood that before the first device sends the first acknowledgment frame and the second acknowledgment frame, the first device first needs to determine that the first link and the second link are in an idle state. Specifically, a condition for the first device to reply with the first acknowledgment frame includes: Both the first link and the second link are in the idle state, or the first link is in the idle state and non-intra BSS transmission exists on the second link. A condition for the first device to reply with the second acknowledgment frame includes: The second link is in the idle state. For a specific manner in which the first device determines that the first link and the second link are in the idle state, refer to the solution A. Details are not described herein again.

It should be understood that, based on the principle of separately using the secondary link provided in this embodiment of this application, if the first device determines that the second link is in a busy state and the first link is in the idle state, the first device can send the first acknowledgment frame. In other words, the first device can separately use the time-frequency resource #1 on the secondary link on a premise of avoiding impact of transmission on the secondary link on transmission on the primary link.

It should be understood that the first wireless frame and the first acknowledgment frame in this embodiment of this application may reuse current wireless frames, or may be used as newly added wireless frames. This is not limited.

In an example, the first wireless frame is an MU-RTS frame, and the first acknowledgment frame is a CTS frame.

C30: The first device uses the time-frequency resource #1 on the first link, and uses the time-frequency resource #2 on the second link.

It should be understood that data transmitted by the first device on the first link and the second link is not limited in this embodiment of this application. For example, the second device transmits a data frame on the first link after sending the first acknowledgment frame, and sends a control frame on the second link after sending the second acknowledgment frame.

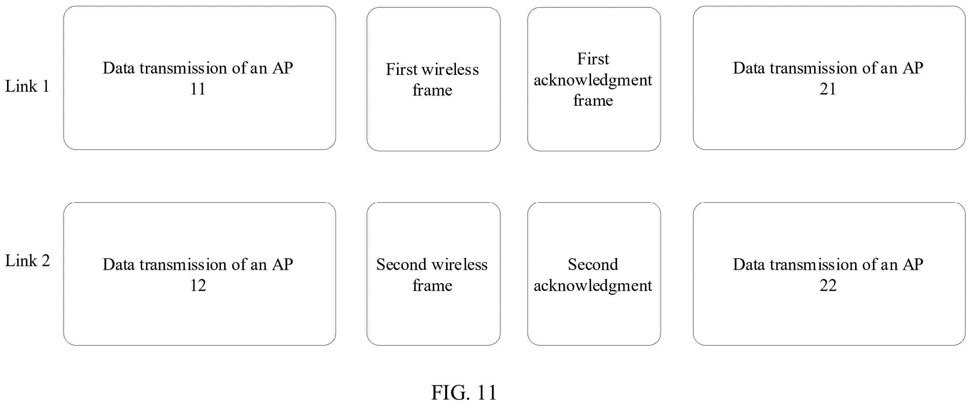

FIG. 11 is a diagram of a usage scenario of the solution C of the method 200 according to an embodiment of this application. As shown in FIG. 11, after completing data transmission on a link 1, an AP 11 belonging to an AP MLD 1 (namely, the second device) sends the first wireless frame to an AP 21 belonging to an AP MLD 2 (namely, the first device); and after completing data transmission on a link 2, an AP 12 belonging to the AP MLD 1 sends the second wireless frame to an AP 22 belonging to the AP MLD 2. In response, after the foregoing determining, the AP 22 sends the first acknowledgment frame to the AP 11 on the link 1, sends the second acknowledgment frame to the AP 12 on the link 2, and then separately performs data transmission on the link 1 and the link 2.

It should be noted that the foregoing link is merely used as an example for ease of description, and a scenario in which coordinated transmission is performed between a plurality of AP MLDs is not limited in embodiments of this application.

Optionally, if the link can be replaced with a channel, the primary link is a primary channel.

Optionally, if the link can be replaced with a frequency domain position, the primary link is a frequency domain position in which a primary channel is located, where the frequency domain position can represent an interval in a spectrum, for example, [f1, f2].

Similarly, in embodiments of this application, links in an NSTR link pair can be replaced with frequency domain positions, in other words, a device cannot simultaneously perform sending and receiving at two frequency domain positions.

Further, the link 1 and the link 2 can be replaced with two frequency domain positions on a same link, and a frequency domain position at which a primary channel is located is used as a primary link.

For example, one link includes one or more anchor channels (anchor channel). When a primary channel on the link is busy, transmission can be performed on another anchor channel. In this example, the primary channel on the link can be analogized to a primary link, and the another channel can be analogized to a secondary link.

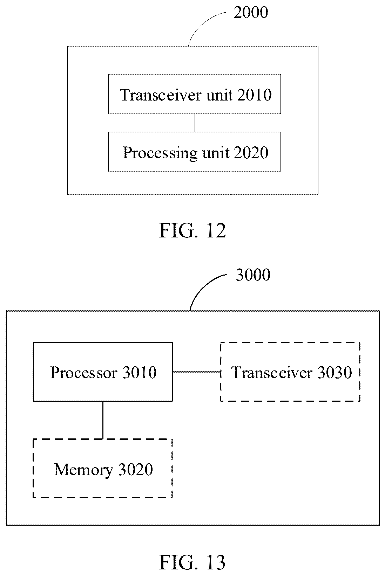

The foregoing describes in detail methods provided in embodiments of this application with reference to FIG. 7 to FIG. 11. The following describes in detail apparatuses provided in embodiments of this application with reference to FIG. 12 to FIG. 15. It should be understood that descriptions of apparatus embodiments correspond to the descriptions of the method embodiments. Therefore, for content that is not described in detail, refer to the foregoing method embodiments. For brevity, details are not described herein again.

The foregoing mainly describes the solutions provided in embodiments of this application from the perspective of interaction between devices. It may be understood that, to implement the foregoing functions, the devices, for example, the second device and the first device, include corresponding hardware structures and/or software modules for performing the functions. A person skilled in the art should be aware that, in combination with units and algorithm steps of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the protection scope of this application.

In embodiments of this application, the second device and the first device may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into the modules is an example is merely logical function division, and may be another feasible division manner during actual implementation. An example in which each functional module is obtained through division based on each corresponding function is used below for description.

FIG. 12 is a block diagram of an apparatus applied to coordinated communication according to an embodiment of this application. The apparatus 2000 includes a transceiver unit 2010 and a processing unit 2020. The transceiver unit 2010 may implement a corresponding communication function, and the processing unit 2010 is configured to process data. The transceiver unit 2010 may also be referred to as a communication interface or a communication unit.

Optionally, the apparatus 2000 may further include a storage unit. The storage unit may be configured to store instructions and/or data, and the processing unit 2020 may read the instructions and/or the data in the storage unit, so that the apparatus implements the foregoing method embodiments.

In a first design, the communication apparatus 2000 may be the second device in the foregoing embodiments, or may be a component (for example, a chip) of the second device. The communication apparatus 2000 may implement steps or procedures performed by the second device in the foregoing method embodiments. The transceiver unit 2010 may be configured to perform operations related to sending and receiving of the second device in the foregoing method embodiments. The processing unit 2020 may be configured to perform operations related to processing of the second device in the foregoing method embodiments.

In a possible implementation, the transceiver unit 2010 is configured to receive a first frame from a second device on a first link, where the first device uses the first link and a second link, the first frame indicates that the second device shares a first time-frequency resource on the first link with the first device, a time domain position of the first time-frequency resource is within a current first transmit opportunity TXOP, and the first TXOP is a transmit opportunity of the second device on the first link. When a first condition is met, the transceiver unit 2010 is further configured to send a second frame to the second device on the first link, where the second frame is an acknowledgment frame of the first frame, and the first condition includes: The first link is currently in an idle state; and the second link is currently in a busy state, or data can be sent on the second link.

In another possible implementation, the transceiver unit 2010 is configured to receive a third frame from a second device on a second link, where the second device uses a non-simultaneous transmit and receive NSTR link pair, the NSTR link pair includes a first link and the second link, the second link is a secondary link of the second device, the third frame indicates that the second device shares a second time-frequency resource on the second link with the first device, a time domain position of the second time-frequency resource is within a second TXOP, and the second TXOP is a transmit opportunity of the second device on the second link. The processing unit 2020 is configured to determine that the second link is in an idle state. The transceiver unit 2010 is further configured to send a fourth frame to the second device on the second link, where the fourth frame is an acknowledgment frame of the third frame.

In a second design, the communication apparatus 2000 may be the second device in the foregoing embodiments, or may be a component (for example, a chip) of the second device. The communication apparatus 2000 may implement steps or procedures performed by the second device in the foregoing method embodiments. The transceiver unit 2010 may be configured to perform operations related to sending and receiving of the second device in the foregoing method embodiments. The processing unit 2020 may be configured to perform operations related to processing of the second device in the foregoing method embodiments.

In a possible implementation, the processing unit 2020 is configured to obtain a first transmit opportunity TXOP on a first link, where the second device uses a non-simultaneous transmit and receive NSTR link pair, the NSTR link pair includes the first link and a second link, and the first link is a primary link of the second device. The transceiver unit 2010 is configured to send a first frame to a first device on the first link, where the first device uses the NSTR link pair, the first link is a secondary link of the first device, the first frame indicates that the second device shares a first time-frequency resource on the first link with the first device, and a time domain position of the first time-frequency resource is within the first TXOP. The transceiver unit 2010 is further configured to receive a second frame from the first device on the first link, where the second frame is an acknowledgment frame of the first frame.

In another possible implementation, the processing unit 2020 is configured to determine that a first link is in a busy state, where the second device uses a non-simultaneous transmit and receive NSTR link pair, the NSTR link pair includes the first link and a second link, and the first link is a primary link of the second device. The processing unit 2020 is further configured to obtain a second TXOP on the second link, where the second link is a secondary link of the second device. The transceiver unit 2010 is configured to send a third frame to a first device on the second link, where the third frame indicates that the second device shares a second time-frequency resource on the second link with the first device, and a time domain position of the second time-frequency resource is within the second TXOP. The transceiver unit 2010 is further configured to receive a fourth frame from the first device on the second link, where the fourth frame is an acknowledgment frame of the third frame.

It should be understood that specific processes of performing the foregoing corresponding steps by the units are described in detail in the foregoing method embodiments. For brevity, details are not described herein again.

It should be further understood that the communication apparatus 2000 herein is embodied in a form of functional units. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs and a memory, a merged logic circuit, and/or another appropriate component that supports the described function. In an optional example, a person skilled in the art may understand that the communication apparatus 2000 may be specifically the second device in the foregoing embodiments, and may be configured to perform the procedures and/or the steps corresponding to the second device in the foregoing method embodiments. Alternatively, the communication apparatus 2000 may be specifically the first device in the foregoing embodiments, and may be configured to perform the procedures and/or the steps corresponding to the first device in the foregoing method embodiments. To avoid repetition, details are not described herein again. The transceiver unit 2010 may alternatively be a transceiver circuit (for example, may include a receiver circuit and a transmitter circuit), and the processing unit 2020 may be a processing circuit.

The communication apparatus 2000 in FIG. 12 may be the device in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

The communication apparatus 2000 in the foregoing solutions has a function of implementing the corresponding steps performed by the second device or the first device in the foregoing methods. The function may be implemented by hardware, or may be implemented by hardware executing corresponding software. The hardware or software includes one or more modules corresponding to the foregoing function. For example, the transceiver unit may be replaced by a transceiver machine (for example, a sending unit in the transceiver unit may be replaced by a transmitter machine, and a receiving unit in the transceiver unit may be replaced by a receiver machine), and another unit, for example, the processing unit, may be replaced by a processor, to separately perform sending and receiving operations and related processing operations in the method embodiments.

FIG. 13 is a diagram of a communication apparatus 3000 according to an embodiment of this application. The communication apparatus 3000 includes a processor 3010. The processor 3010 is configured to execute a computer program or instructions stored in a memory 3020, or read data or signaling stored in the memory 3020, to perform the method in the foregoing method embodiments. Optionally, there are one or more processors 3010.

Optionally, as shown in FIG. 13, the communication apparatus 3000 further includes the memory 3020, and the memory 3020 is configured to store a computer program or instructions and/or data. The memory 3020 may be integrated with the processor 3010, or may be disposed separately. Optionally, there are one or more memories 3020.

Optionally, as shown in FIG. 13, the communication apparatus 3000 further includes a transceiver 3030. The transceiver 3030 is configured to receive a signal and/or send a signal. For example, the processor 3010 is configured to control the transceiver 3030 to receive the signal and/or send the signal.

In a solution, the communication apparatus 3000 is configured to implement operations performed by the second device in the foregoing method embodiments.

For example, the processor 3010 is configured to execute a computer program or instructions stored in the memory 3020, to implement related operations of the second device in the foregoing method embodiments, for example, the methods performed by the second device in the embodiments shown in FIG. 7 to FIG. 11.

In another solution, the communication apparatus 3000 is configured to implement the operations performed by the first device in the foregoing method embodiments.

For example, the processor 3010 is configured to execute a computer program or instructions stored in the memory 3020, to implement related operations of the second AP in the foregoing method embodiments, for example, the methods performed by the first device in the embodiments shown in FIG. 7 to FIG. 11.

It should be understood that, the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM includes a plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (storage module) may be integrated into the processor.

It should be further noted that the memory described in this specification is intended to include, but is not limited to, these memories and any other appropriate type of memory.

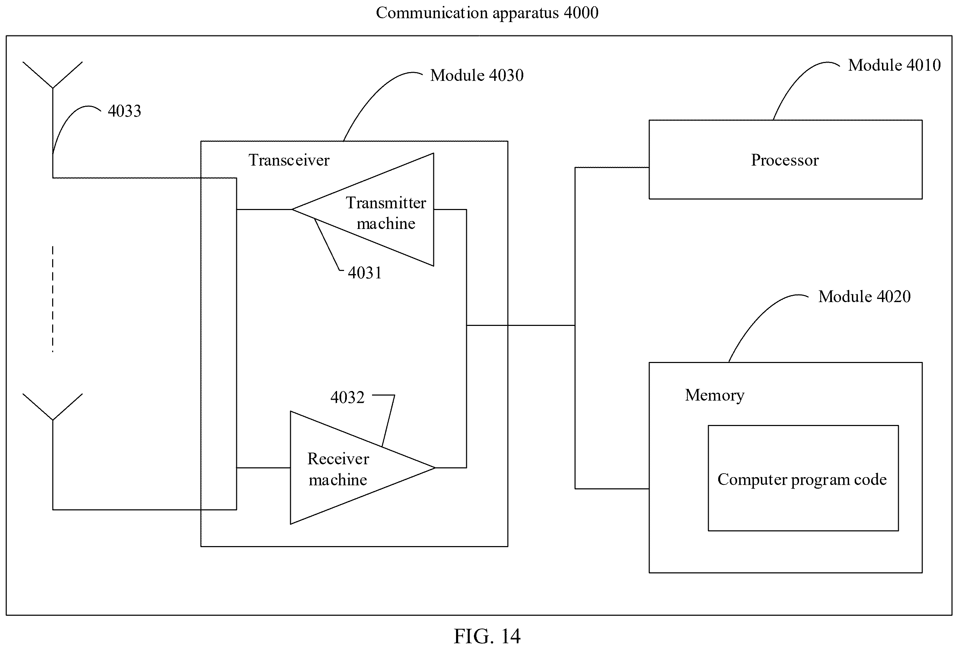

FIG. 14 is a block diagram of a communication apparatus 4000 according to an embodiment of this application. The communication apparatus 4000 may be an access point multi-link device AP MLD (namely, the second device or the first device), or may be a chip. The communication apparatus 4000 may be configured to perform operations performed by the second device or the first device in the method embodiments shown in FIG. 7 to FIG. 11.

When the communication apparatus 1000 is an AP MLD, for example, a base station, FIG. 14 is a simplified diagram of a structure of the base station. The base station includes a module 4010, a module 4020, and a module 4030. The module 4010 is mainly configured to: perform baseband processing, control the base station, and so on. The module 4010 is usually a control center of the base station, may be usually referred to as a processor, and is configured to control the base station to perform a processing operation on a network device side in the foregoing method embodiments. The module 4020 is mainly configured to store computer program code and data. The module 4030 is mainly configured to: receive and send radio frequency signals and perform conversion between the radio frequency signal and a baseband signal. The module 4030 may be usually referred to as a transceiver module, a transceiver machine, a transceiver circuit, a transceiver, or the like. The transceiver module in the module 4030 may also be referred to as a transceiver machine, a transceiver, or the like. The transceiver module includes an antenna 4033 and a radio frequency circuit (not shown in FIG. 14). The radio frequency circuit is mainly configured to perform radio frequency processing. Optionally, a component configured to implement a receiving function in the module 4030 may be considered as a receiver machine, and a component configured to implement a sending function may be considered as a transmitter machine. In other words, the module 4030 includes a receiver machine 4032 and a transmitter machine 4031. The receiver machine may also be referred to as a receiving module, a receiver, a receiver circuit, or the like, and the transmitter machine may be referred to as a transmitting module, a transmitter, a transmitter circuit, or the like.

The module 4010 and the module 4020 may include one or more boards, and each board may include one or more processors and one or more memories. The processor is configured to read and execute a program in the memory, to implement a baseband processing function and control the base station. If there are a plurality of boards, the boards may be interconnected with each other to enhance a processing capability. In an optional implementation, a plurality of boards may share one or more processors, a plurality of boards share one or more memories, or a plurality of boards simultaneously share one or more processors.

For example, in an implementation, the transceiver module of the module 4030 is configured to perform a receiving/sending-related process performed by the second device in the embodiments shown in FIG. 7 to FIG. 11. The processor of the module 4010 is configured to perform a processing-related process performed by the second device in the embodiments shown in FIG. 7 to FIG. 11.

In another implementation, the processor of the module 4010 is configured to perform a processing-related process performed by the first device in the embodiments shown in FIG. 7 to FIG. 11.

In another implementation, the transceiver module of the module 4030 is configured to perform a sending/receiving-related process performed by the first device in the embodiments shown in FIG. 7 to FIG. 11.

It should be understood that FIG. 14 is merely an example rather than a limitation, and the network device including the processor, the memory, and the transceiver may not depend on the structures shown in FIG. 12 and FIG. 13.

When the communication apparatus 1000 is a chip, the chip includes a transceiver, a memory, and a processor. The transceiver may be an input/output circuit or a communication interface. The processor is a processor, a microprocessor, or an integrated circuit integrated on the chip. A sending operation performed by the network device in the foregoing method embodiments may be understood as an output of the chip, and a receiving operation performed by the network device in the foregoing method embodiments may be understood as an input of the chip.

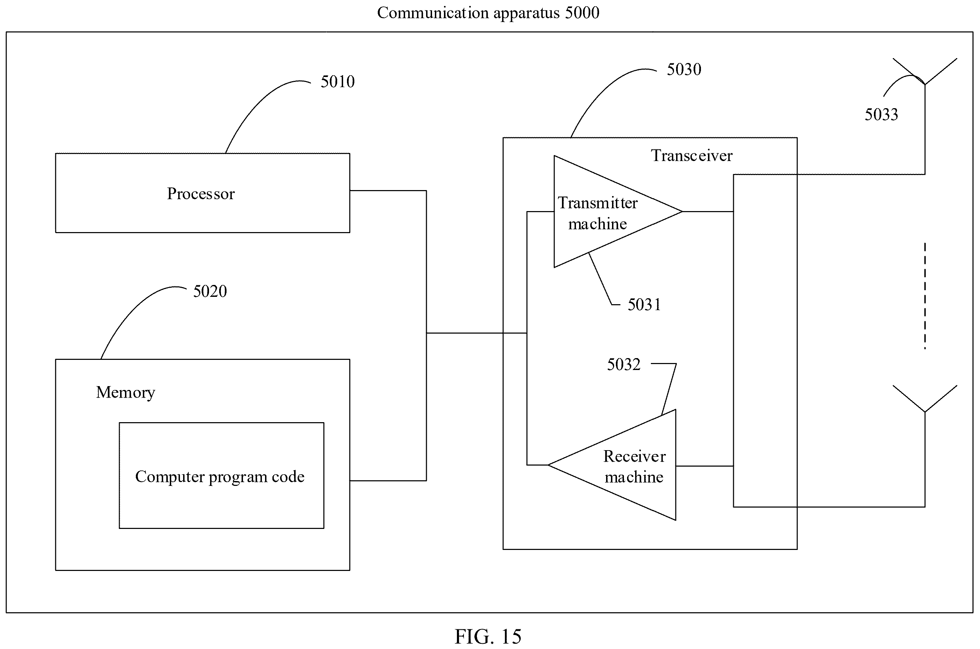

FIG. 15 is a block diagram of a communication apparatus 5000 according to an embodiment of this application. The communication apparatus 5000 may be a station multi-link device non-AP MLD (namely, the second device and the first device), a processor of the non-AP MLD, or a chip. The communication apparatus 5000 may be configured to perform operations performed by the second device and the first device in the foregoing method embodiments.

When the communication apparatus 5000 is a non-AP MLD, and the non-AP MLD is a terminal device, FIG. 10 is a simplified diagram of a structure of the terminal device. As shown in FIG. 15, the terminal device includes a processor 5010, a memory 5020, and a transceiver 5030. The memory 5020 may store computer program code. The transceiver 5030 includes a transmitter machine 5031, a receiver machine 5032, a radio frequency circuit (not shown in FIG. 15), an antenna 5033, and an input/output apparatus (not shown in FIG. 15).

The processor 5010 is mainly configured to: process a communication protocol and communication data, control the terminal device, execute a software program, process data of the software program, and so on. The memory 5020 is mainly configured to store the software program and data. The radio frequency circuit is mainly configured to perform conversion between a baseband signal and a radio frequency signal and process the radio frequency signal. The antenna 5033 is mainly configured to receive and send radio frequency signals in a form of an electromagnetic wave. The input/output apparatus, for example, a touchscreen, a display, or a keyboard, is mainly configured to: receive data input by a user and output data to the user. It should be noted that some types of terminal devices may not have an input/output apparatus.

When data needs to be sent, the processor performs baseband processing on the to-be-sent data, and outputs a baseband signal to the radio frequency circuit. The radio frequency circuit performs radio frequency processing on the baseband signal, and then sends a radio frequency signal to the outside through the antenna in a form of an electromagnetic wave. When data is sent to the terminal device, the radio frequency circuit receives a radio frequency signal through the antenna, converts the radio frequency signal into a baseband signal, and outputs the baseband signal to the processor. The processor converts the baseband signal into data, and processes the data. For ease of description, FIG. 15 merely shows one memory, one processor, and one transceiver. In an actual terminal device product, there may be one or more processors and one or more memories. The memory may also be referred to as a storage medium, a storage device, or the like. The memory may be disposed independent of the processor, or may be integrated with the processor. This is not limited in this embodiment of this application.

In this embodiment of this application, the antenna and the radio frequency circuit that have sending and receiving functions may be considered as a transceiver module of the terminal device, and the processor that has a processing function may be considered as a processing module of the terminal device.

As shown in FIG. 15, the terminal device includes the processor 5010, the memory 5020, and the transceiver 5030. The processor 5010 may also be referred to as a processing unit, a processing board, a processing module, a processing apparatus, or the like. The transceiver 5030 may also be referred to as a transceiver unit, a transceiver machine, a transceiver apparatus, or the like.

Optionally, a component configured to implement a receiving function in the transceiver 5030 may be considered as a receiving module, and a component configured to implement a sending function in the transceiver 5030 may be considered as a sending module. In other words, the transceiver 5030 includes a receiver and a transmitter. The transceiver sometimes may also be referred to as a transceiver machine, a transceiver module, a transceiver circuit, or the like. The receiver sometimes may also be referred to as a receiver machine, a receiving module, a receiver circuit, or the like. The transmitter sometimes may also be referred to as a transmitter machine, a transmitting module, a transmitter circuit, or the like.

For example, in an implementation, the processor 5010 is configured to perform a processing action on a side of the second device in the embodiments shown in FIG. 7 to FIG. 11, and the transceiver 5030 is configured to perform receiving and sending actions on the side of the second device in FIG. 7 to FIG. 11.

For example, in an implementation, the processor 5010 is configured to perform a processing action on a side of the first device in the embodiments shown in FIG. 7 to FIG. 11, and the transceiver 5030 is configured to perform receiving and sending actions on the side of the first device in FIG. 7 to FIG. 11.

It should be understood that FIG. 15 is merely an example rather than a limitation, and the terminal device including the transceiver module and the processing module may not depend on the structures shown in FIG. 12 and FIG. 13.

When the communication apparatus 5000 is a chip, the chip includes a processor, a memory, and a transceiver. The transceiver may be an input/output circuit or a communication interface. The processor may be a processing module, a microprocessor, or an integrated circuit integrated on the chip. A sending operation performed by the terminal device in the foregoing method embodiments may be understood as an output of the chip, and a receiving operation performed by the terminal device in the foregoing method embodiments may be understood as an input of the chip.

An embodiment of this application further provides a chip. The chip includes a processor, configured to invoke, from a memory, instructions stored in the memory and run the instructions, to enable a communication device in which the chip is installed to perform the method in the foregoing examples.

An embodiment of this application further provides another chip. The chip includes an input interface, an output interface, a processor, and a memory. The input interface, the output interface, the processor, and the memory are connected through an internal connection path. The processor is configured to execute code in the memory. When the code is executed, the processor is configured to perform the method in the foregoing examples.

An embodiment of this application further provides a processor, configured to be coupled to a memory, and configured to perform a method and a function that are related to a satellite or user equipment in any one of the foregoing embodiments.

In another embodiment of this application, a computer program product is provided. When the computer program product runs on a computer, the method in the foregoing embodiments is implemented.

Another embodiment of this application provides a computer-readable storage medium. The computer-readable storage medium stores a computer program. When the computer program is executed by a computer, the method in the foregoing embodiments is implemented.

In the descriptions of embodiments of this application, "a plurality of" means two or more than two unless otherwise specified. "At least one of the following items (pieces)" or a similar expression thereof refers to any combination of these items, including any combination of singular items (pieces) or plural items (pieces). For example, at least one of a, b, or c may indicate: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same functions and purposes. A person skilled in the art may understand that the terms such as "first" and "second" do not limit a quantity or an execution sequence, and the terms such as "first" and "second" do not indicate a definite difference. In addition, in embodiments of this application, the term "example", "for example", or the like is used to represent giving an example, an illustration, or a description.

Any embodiment or design scheme described with "example" or "for example" in embodiments of this application should not be explained as being more preferred or having more advantages than another embodiment or design scheme. Exactly, use of the term "example", "for example", or the like is intended to present a related concept in a specific manner for ease of understanding.

Unless otherwise specified, "/" in the descriptions of embodiments of this application represents an "or" relationship between associated objects. For example, A/B may represent A or B. In this application, "and/or" represents only an association relationship for describing associated objects and represents that three relationships may exist. For example, A and/or B may represent the following three cases: Only A exists, both A and B exist, and only B exists. A and B may be singular or plural.

It should be understood that "one embodiment" or "an embodiment" mentioned throughout this specification means that particular features, structures, or characteristics related to embodiments are included in at least one embodiment of the present invention.

Therefore, "in an embodiment" or "in one embodiment" appearing throughout the entire specification does not necessarily refer to a same embodiment. In addition, these particular features, structures, or characteristics may be combined in one or more embodiments in any appropriate manner. Sequence numbers of the foregoing processes do not mean execution sequences in embodiments of the present invention. The execution sequences of the processes should be determined based on functions and internal logic of the processes, and should not constitute any limitation on implementation processes of embodiments of the present invention.

It may be understood that, an "embodiment" mentioned throughout this specification means that particular features, structures, or characteristics related to the embodiment are included in at least one embodiment of this application.

Therefore, embodiments in the entire specification do not necessarily refer to a same embodiment. In addition, these particular features, structures, or characteristics may be combined in one or more embodiments in any appropriate manner. It may be understood that sequence numbers of processes do not mean execution sequences in embodiments of this application. The execution sequences of the processes should be determined based on functions and internal logic of the processes, and should not constitute any limitation on implementation processes of embodiments of this application.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

A person skilled in the art may clearly understand that, for the purpose of convenient and brief description, for a detailed working process of the foregoing system, apparatus, and unit, refer to a corresponding process in the foregoing method embodiments, and details are not described herein again. In several embodiments provided in this application, it should be understood that the disclosed system, apparatuses, and methods may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed.

In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, in other words, may be located at one position, or may be distributed on a plurality of network units. Some or all of the units may be selected based on actual requirements to achieve the objectives of the solutions of embodiments. In addition, functional units in embodiments of this application may be integrated into one processing unit, each of the units may exist alone physically, or two or more units may be integrated into one unit.

When functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the method in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A coordinated communication method, comprising:
receiving, by a first device, a first frame from a second device on a first link, wherein the first device uses a non-simultaneous transmit and receive NSTR link pair, the NSTR link pair comprises the first link and a second link, the first link is a secondary link of the first device, the second link is a primary link of the first device, the first frame indicates that the second device shares a first time-frequency resource on the first link with the first device, a time domain position of the first time-frequency resource is within a current first transmit opportunity TXOP, and the first TXOP is a transmit opportunity of the second device on the first link; and
when a first condition is met, sending, by the first device, a second frame to the second device on the first link, wherein the second frame is an acknowledgment frame of the first frame, and the first condition comprises:
the first device determines that the first link is currently in an idle state; and
the first device determines that the second link is currently in a busy state, or the first device is capable of sending data on the second link.

2. The method according to claim 1, wherein that the first device determines that the second link is currently in the busy state comprises:
the first device determines that non-intra basic service set BSS transmission currently exists on the second link.

3. The method according to claim 2, wherein the method further comprises:
determining, by the first device, first time, wherein the first time is end time of non-intra BSS transmission; and
before the first time, stopping, by the first device, using the first time-frequency resource.

4. The method according to any one of claims 1 to 3, wherein that the first device is capable of sending data on the second link comprises:
the first device completes backoff on the second link; or
the second device shares a second time-frequency resource on the second link with the first device, the second device uses the NSTR link pair, the second link is a secondary link of the second device, a time domain position of the second time-frequency resource is within a second TXOP, and the second TXOP is a transmit opportunity of the second device on the second link.

5. The method according to claim 4, wherein that the second device shares the second time-frequency resource on the second link with the first device comprises:
the first device receives a third frame from the second device on the second link, wherein the third frame indicates that the second device shares the second time-frequency resource with the first device; and
when the first device determines that the second link is idle, the first device sends a fourth frame to the second device on the second link, wherein the fourth frame is an acknowledgment frame of the third frame.

6. The method according to claim 5, wherein the first frame and the third frame are multi-user request to send MU-RTS frames, and the second frame and the fourth frame are clear to send CTS frames.

7. A coordinated communication method, comprising:
obtaining, by a second device, a first transmit opportunity TXOP on a first link;
sending, by the second device, a first frame to a first device on the first link, wherein the first device uses a non-simultaneous transmit and receive NSTR link pair, the NSTR link pair comprises the first link and a second link, the first link is a secondary link of the first device, the first frame indicates that the second device shares a first time-frequency resource on the first link with the first device, and a time domain position of the first time-frequency resource is within the first TXOP; and
receiving, by the second device, a second frame from the first device on the first link, wherein the second frame is an acknowledgment frame of the first frame.

8. The method according to claim 7, wherein the second device uses the NSTR link pair, the first link is a primary link of the second device, the second link is a secondary link of the second device, and the second link is a primary link of the first device; and
the method further comprises:
obtaining, by the second device, a second TXOP on the second link;
sending, by the second device, a third frame to the first device on the second link, wherein the third frame indicates that the second device shares a second time-frequency resource on the second link with the first device, and a time domain position of the second time-frequency resource is within the second TXOP; and
receiving, by the second device, a fourth frame from the first device on the second link, wherein the fourth frame is an acknowledgment frame of the third frame.

9. The method according to claim 8, wherein before obtaining, by the second device, the second TXOP on the second link, the method further comprises:
determining, by the first device, that non-intra BSS transmission currently exists on the first link.

10. The method according to claim 9, wherein the method further comprises:
determining, by the second device, second time, wherein the second time is end time of non-intra BSS transmission; and
before the second time, stopping, by the second device, using the second TXOP.

11. The method according to any one of claims 8 to 10, wherein the first frame and the third frame are multi-user request to send MU-RTS frames, and the second frame and the fourth frame are clear to send CTS frames.

12. A coordinated communication method, comprising:
receiving, by a first device, a third frame from a second device on a second link, wherein the second device uses a non-simultaneous transmit and receive NSTR link pair, the NSTR link pair comprises a first link and the second link, the second link is a secondary link of the second device, the third frame indicates that the second device shares a second time-frequency resource on the second link with the first device, a time domain position of the second time-frequency resource is within the second TXOP, and the second TXOP is a transmit opportunity of the second device on the second link; and
when the first device determines that the second link is idle, sending, by the first device, a fourth frame to the second device on the second link, wherein the fourth frame is an acknowledgment frame of the third frame.

13. A coordinated communication method, comprising:
determining, by a second device, that a first link is in a busy state, wherein the second device uses a non-simultaneous transmit and receive NSTR link pair, the NSTR link pair comprises the first link and a second link, and the first link is a primary link of the second device;
obtaining, by the second device, a second transmit opportunity TXOP on the second link, wherein the second link is a secondary link of the second device;
sending, by the second device, a third frame to a first device on the second link, wherein the third frame indicates that the second device shares a second time-frequency resource on the second link with the first device, and a time domain position of the second time-frequency resource is within the second TXOP; and
receiving, by the second device, a fourth frame from the first device on the second link, wherein the fourth frame is an acknowledgment frame of the third frame.

14. The method according to claim 13, wherein determining, by the second device, that the first link is in the busy state comprises:
determining, by the first device, that non-intra BSS transmission exists on the second link.

15. The method according to claim 13 or 14, wherein the method further comprises:
determining, by the second device, second time, wherein the second time is end time of non-intra BSS transmission; and
before the second time, stopping, by the second device, using the second TXOP.

16. The method according to claim 15, wherein end time of the second time-frequency resource is not earlier than the second time.

17. The method according to any one of claims 13 to 16, wherein the third frame is a multi-user request to send MU-RTS frame, and the fourth frame is a clear to send CTS frame.

18. A communication apparatus, wherein the communication apparatus comprises a unit configured to perform the method according to any one of claims 1 to 6, a unit configured to perform the method according to any one of claims 7 to 11, a unit configured to perform the method according to claim 12, or a unit configured to perform the method according to any one of claims 13 to 17.

19. A communication apparatus, comprising:
a processor, configured to execute computer instructions stored in a memory, to enable the communication apparatus to perform the method according to any one of claims 1 to 6, the method according to any one of claims 7 to 11, the method according to claim 12, or the method according to any one of claims 13 to 17.

20. The communication apparatus according to claim 19, wherein the communication apparatus further comprises the memory.

21. The communication apparatus according to claim 19 or 20, wherein the communication apparatus further comprises a communication interface, the communication interface is coupled to the processor, and the communication interface is configured to input and/or output information.

22. A computer-readable storage medium, configured to store a computer program, wherein the computer program comprises instructions used to implement the method according to any one of claims 1 to 6, instructions used to implement the method according to any one of claims 7 to 11, instructions used to implement the method according to claim 12, or instructions used to implement the method according to any one of claims 13 to 17.

23. A computer program, wherein the computer program comprises instructions used to implement the method according to any one of claims 1 to 6, instructions used to implement the method according to any one of claims 7 to 11, instructions used to implement the method according to claim 12, or instructions used to implement the method according to any one of claims 13 to 17.
